# EUROPEAN PATENT SPECIFICATION

(11) **EP 4 061 854 B1**
(45) Date of publication and mention of the grant of the patent: **27.11.2024**
(21) Application number: 20804413.1
(22) Date of filing: 28.10.2020
(51) Int. Cl.: C08B 11/145, C08B 11/20, C08B 37/00

(54) **SILICON GLYCAN AND METHOD OF PREPARING SAME**
SILIKONGLYKAN UND METHODEN ZUR HERSTELLUNG
SILICIUM GLYCAN ET PROCÉDÉ DE PRÉPARATION

(30) Priority: 19.11.2019 US 201962937440 P
(43) Date of publication of application: 28.09.2022
(73) Proprietor: Dow Silicones Corporation, Midland, MI 48686-0994 (US); Dow Global Technologies LLC, Midland, MI 48674 (US)
(72) Inventor: COURTEMANCHE, Marc-Andre, Midland, MI 48686-0994 (US); PARTAIN, Emmett, M., III., Collegeville, PA 19426 (US)
(74) Representative: Murgitroyd & Company
(86) International application number: PCT/US2020/057594
(87) International publication number: WO 2021/101677

(56) References cited:
- EP-A1- 0 385 396
- EP-A1- 0 770 660
- EP-A1- 3 906 262
- WO-A1-2016/073004
- WO-A1-2020/142344
- WO-A2-00/60023
- CN-A- 104 357 031
- US-A- 5 015 700
- US-A1- 2013 130 949

## Description

### CROSS-REFERENCE TO RELATED APPLICATIONS

This application claims the benefit of U.S. Provisional Patent Application Serial No. 62/937440 filed on 19 November 2019 under 35 U.S.C. §119 (e).

### FIELD OF THE INVENTION

The present invention generally relates to functional polymers and, more specifically, to a silicon glycan and methods of preparing the same.

### DESCRIPTION OF THE RELATED ART

Compounds that exhibit rheology-modifying properties are employed in various industrial compositions, such as in drilling fluids. Silicone polymers and saccharide-based polymers (e.g. cellulose ethers) are two classes of such compounds. Silicone polymers and cellulose ethers are non-toxic compounds that are extensively used in industrial compositions, yet possess comparatively antagonistic properties with respect to one another. Silicone polymers are synthetically prepared, and are typically flexible, elastic, and non-polar. Silicone polymers generally exhibit high spreading and wetting behaviors associated with low surface tension and low surface energy. Cellulose ethers, for comparative example, are typically rigid, hydrophilic water-soluble polymers derived from natural sources, and are frequently utilized as rheology modifiers.

EP0385396 discloses silicon glycans with the silyl moiety bound to the saccharide via ester or ether bonds.

### BRIEF SUMMARY OF THE INVENTION

A silicon glycan is provided. The silicon glycan has the formula: 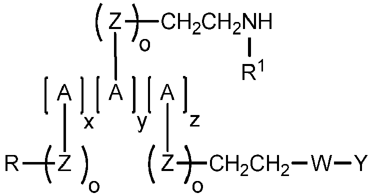 where each A comprises an independently selected saccharide moiety; each W is independently selected from the group consisting of an amide moiety and an imide moiety; each Y comprises an independently selected organosilicon moiety; each R is independently selected from substituted or unsubstituted hydrocarbyl groups, ether moieties, amine moieties, and H; each R¹ is independently selected from substituted or unsubstituted hydrocarbyl groups and H; each Z is an independently selected ether moiety; each subscript o is independently 0 or 1; subscripts x and y are each independently from ≥0 to <1; subscript z is from >0 to 1, with the proviso that x+y+z =1; and moieties indicated by subscripts x, y, and z may be in randomized or block form in the silicon glycan.

A method preparing the silicon glycan is also disclosed. The method comprises reacting (A) an aminoethyl polysaccharide and (B) an anhydride-functional organosilicon compound, to give the silicon glycan.

### DETAILED DESCRIPTION OF THE INVENTION

A silicon glycan has the general formula (I): 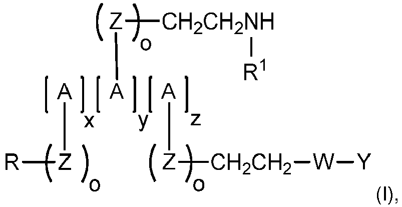 where each A comprises an independently selected saccharide moiety; each W is independently selected from the group consisting of an amide moiety and an imide moiety; each Y comprises an independently selected organosilicon moiety; each R is independently selected from substituted or unsubstituted hydrocarbyl groups, ether moieties, amine moieties, and H; each R¹ is independently selected from substituted or unsubstituted hydrocarbyl groups and H; each Z is an independently selected ether moiety; each subscript o is independently 0 or 1; subscripts x and y are each independently from ≥0 to <1; subscript z is from >0 to 1, with the proviso that x+y+z =1; and moieties indicated by subscripts x, y, and z may be in randomized or block form in the silicon glycan.

In general, the silicon glycan comprises a glycoside (i.e., at least two saccharides bound to one another via a glycosidic linkage), which is represented in the portion of general formula (I) corresponding to the following moiety (i.e., the "glycoside moiety"): 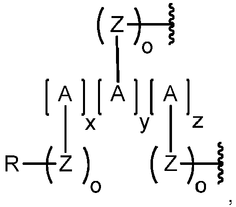 where each saccharide moiety A comprises, alternatively consists essentially of, a saccharide, and subscripts x, y, and z each represent a mole fractions of particular saccharide moieties A within the glycoside moiety. Said differently, each saccharide moiety A is bound to at least one other saccharide moiety A (e.g. via glycosidic linkage), such that each saccharide moiety A is a component of, and collectively form, the glycoside of the silicon glycan. Moreover, each saccharide moiety A indicated by subscripts x, y, and z may be in randomized or block form in the silicon glycan. As described in further detail herein, Z and R represent substituents native to or otherwise appended to each saccharide moiety A within the glycoside moiety of the silicon glycan.

It is to be appreciated that the term "saccharide" may be used synonymously with the term "carbohydrate" under general circumstances, and terms like "sugar" under more specific circumstances. The nomenclature of any particular saccharide is not exclusionary with regard to the composition of the silicon glycan as a whole, or any saccharide moiety A in particular. Rather, as will be understood by those of skill in the art, each saccharide moiety A may include, alternatively may be, any moiety that can be described as a saccharide, carbohydrate, sugar, starch, cellulose, and the like, or a derivative or modification thereof, or combinations thereof. Likewise, any combination of more than one A in the silicon glycan may be described more descriptive terms. For example, the term "polysaccharide" may be used synonymously with the term "glycoside," where both terms generally refer to a combination of more than one saccharide moiety A in the silicon glycan (e.g. where the combination of saccharide moieties A are linked together via glycosidic linkage(s) and collectively form the glycoside moiety). One of skill in the art will appreciate that terms such as "starch" and "cellulose" may be used to refer to such combinations of saccharide moieties A under specific circumstances (e.g. when a combination of more than one A in the silicon glycan A conforms to the structure known in the art as a "starch" or a "cellulose", etc.).

As introduced above, subscripts x, y, z each represent a mole fraction of particular saccharide moieties A within the glycoside moiety of the silicon glycan. As such, the values of x+y+z=1. More specifically, as represented by formula (I), not every saccharide moiety A within the glycoside moiety of the silicon glycan need be substituted identically. As such, the glycoside moiety of the silicon glycan may be described in various ways, e.g. in terms of overall composition using the mole fractions x, y, and z, in terms of the mean average number of substitutions per saccharide moiety A (i.e., the degree of substitution (DS), as understood by those of skill in the art), or combinations thereof.

In general, subscript x is a mole fraction of from ≥0 to <1. In specific embodiments, subscript x is a mole fraction of from 0 to 0.99, such as from 0.1 to 0.99, alternatively of from 0.3 to 0.99, alternatively of from 0.5 to 0.99, alternatively of from 0.6 to 0.99, alternatively of from 0.7 to 0.99, alternatively of from 0.7 to 0.9, alternatively of from 0.7 to 0.85. In general, subscript y is a mole fraction of from ≥0 to <1. In certain embodiments, subscript y is a mole fraction of from 0 to 0.9, such as from 0.001 to 0.7, alternatively of from 0.001 to 0.5, alternatively of from 0.002 to 0.5, alternatively of from 0.002 to 0.4, alternatively of from 0.002 to 0.3, alternatively of from 0.005 to 0.3, alternatively of from 0.01 to 0.25. In general, subscript z is a mole fraction of from >0 to 1. In particular embodiments, subscript z is a mole fraction of from 0.00001 to 0.9, such as from 0.00001 to 0.7, alternatively of from 0.00001 to 0.5, alternatively of from 0.00001 to 0.3, alternatively of from 0.00001 to 0.2, alternatively of from 0.00001 to 0.15, alternatively of from 0.000015 to 0.15, alternatively of from 0.00002 to 0.15, alternatively of from 0.00002 to 0.1, alternatively of from 0.00005 to 0.09, alternatively of from 0.0001 to 0.09, alternatively of from 0.0005 to 0.09, alternatively of from 0.001 to 0.09.

In general, the silicon glycan has average degree of substitution of from 0.00001 to 0.99 organosilicon moieties per saccharide moiety A. For example, in certain embodiments, the degree of organosilicon moiety substitution of the silicon glycan is from 0.00001 to 0.5, alternatively from 0.00001 to 0.2, alternatively from 0.00001 to 0.15, alternatively from 0.0001 to 0.5, alternatively from 0.0001 to 0.2, alternatively from 0.0001 to 0.15.

The degree of aminoethyl substitution of the aminoethyl polysaccharide (A) may be determined by various techniques, which are known by those of skill in the art. For example, the nitrogen content of the aminoethyl polysaccharide (A) (e.g. as determined via the Kjeldahl method) may be utilized directly, or adjusted (e.g. based on the nitrogen content of the hydroxyl-functional polysaccharide (A1)) to ascertain the degree of aminoethyl substitution the aminoethyl polysaccharide (A).

Regardless of the particular proportions described by subscripts x and y and z, the total number of saccharide moieties A in the silicon glycan (e.g. the degree of polymerization thereof) may vary, and is generally from 10 to 10,000. For example, in certain embodiments, silicon glycan comprises a total of from 10 to 10,000 saccharide moieties A, such as from 100 to 8,000, alternatively from 250 to 6,000, alternatively from 600 to 6,000, alternatively from 400 to 3,600 saccharide moieties A.

Each saccharide moiety A may be the same as or different from any other saccharide moiety A in the silicon glycan. For example, in certain embodiments, each saccharide moiety A is the same (e.g. comprises, alternatively consists essentially of, the same saccharide). In other embodiments, the silicon glycan comprises at least one saccharide moiety A that is different than at least one other saccharide moiety A (e.g. with respect to the saccharides thereof). General examples of particular saccharides suitable for saccharide moiety A include those conventionally referred to as monosaccharides and/or sugars. Such monosaccharides include pentoses (i.e., furanoses), such as riboses, xyloses, arabinoses, lyxoses, fructoses, etc., and hexoses (i.e., pyranoses), such as glucoses, galactoses, mannoses, guloses, idoses, taloses, alloses, altroses, etc. As such, one of skill in the art will appreciate that the glycoside moiety of the silicon glycan may comprise and/or be defined as a disaccharide (e.g. a sucrose, a lactose, a maltose, a trehalose, etc.), an oligosaccharide (e.g. a malto-oligosaccharide, such as a maltodextrin, a rafinose, a stachyose, a fructooligosaccharides, etc.), a polysaccharide (e.g. a cellulose, a hemicellulose, a pectin, a glycogen, a hydrocolloid, a starch such as an amylose, an amylopectin, a modified starch, etc.), or the like, or combinations thereof.

In certain embodiments, the silicon glycan comprises at least one saccharide moiety A that is a hexose. In some such embodiments, the hexose has general formula: 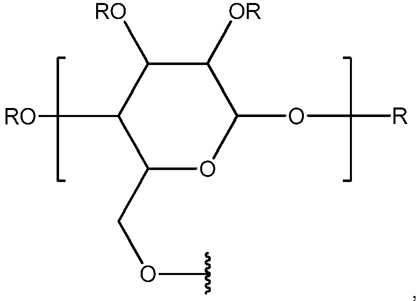 which, as understood by those of skill in the art, encompasses both internal as well as terminal monomers of the glycoside moiety formed therefrom. In such embodiments, each R is independently selected and as described herein. In specific embodiments, the glycoside moiety of the silicon glycan comprises, alternatively consists essentially of, glucose monomers, and thus corresponds to the general formula: 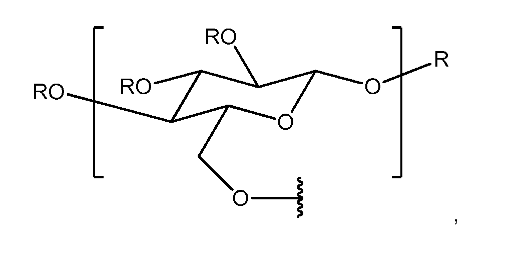 which, as understood by those of skill in the art, also encompasses both internal as well as terminal monomers of the glycoside moiety formed therefrom. In such specific embodiments, each R is independently selected and as described herein.

In some embodiments, the glycoside moiety of the silicon glycan comprises and/or may be defined as a polysaccharide selected from pullulans, mannans, galactomannans, xyloglucans, xanthans, hydroxyethyl celluloses, carboxymethyl celluloses, ethyl hydroxyethyl celluloses, hydroxyethyl methyl celluloses, hydroxypropyl methyl celluloses, methyl celluloses, ethyl celluloses, and the like, as well as combinations thereof.

In certain embodiments, the glycoside moiety of the silicon glycan comprises a derivative (e.g. a modified and/or altered version) of one of the oligosaccharides or polysaccharides defined above. For example, the glycoside moiety may be a hydrophobically modified polysaccharide, a cationically modified polysaccharide, a hydrophilically modified polysaccharide a copolymerized polysaccharide, or a combination thereof. Such modifications typically alter the saccharide moieties A within the glycoside by appending substituents thereto (e.g. via the native hydroxyl moieties thereof, such as those at positions C2, C3, and/or C6 when the saccharide moieties A comprises a hexose). In particular, as introduced and shown above with respect to formula (I), the saccharide moieties A designated by subscript x of the silicon glycan comprise substituents R, and optionally Z, as described below. For example, R may be H in any saccharide moieties A designated by subscript x in the glycoside moiety. R is typically H in each native (i.e., naturally occurring and/or unsubstituted) saccharide in any particular saccharide moiety A, such that the particular saccharide moiety A has at least one free hydroxyl substituent.

When the glycoside moiety of the silicon glycan comprises a polysaccharide derivative as described above, at least one R is selected from substituted or unsubstituted hydrocarbyl groups, ether moieties, and amine moieties. However, the silicon glycan may comprise any number of substituents R so defined, limited only by saccharide moieties A of the glycoside moiety, the DS of the glycoside moiety, etc., as will be understood by those of skill in the art in view of the description herein.

With regard to hydrocarbyl groups of R, the term "substituted" describes hydrocarbon moieties where either one or more hydrogen atoms is replaced with atoms other than hydrogen (e.g. a halogen atom, such as chlorine, fluorine, bromine, or iodine), a carbon atom within a chain of the hydrocarbon is replaced with an atom other than carbon (i.e., R includes one or more heteroatoms (such as oxygen, sulfur, nitrogen, or phosphorus) within the chain, or both. As such, it will be appreciated that R includes hydrocarbon moieties that may have substituents in and/or on (i.e., appended to and/or integral with) carbon chains/backbones thereof, such that R may comprise or be an ether, an amine, etc.

In general, hydrocarbyl groups suitable for R may independently be linear, branched, cyclic, or combinations thereof. Cyclic hydrocarbyl groups encompass aryl groups as well as saturated or nonconjugated cyclic groups. Cyclic hydrocarbyl groups may independently be monocyclic or polycyclic. Linear and branched hydrocarbyl groups may independently be saturated or unsaturated. One example of a combination of a linear and cyclic hydrocarbyl group is an aralkyl group. General examples of hydrocarbyl groups include alkyl groups, aryl groups, alkenyl groups, halocarbon groups, and the like, as well as derivatives, modifications, and combinations thereof. Examples of suitable alkyl groups include methyl, ethyl, propyl (e.g. iso-propyl and/or n-propyl), butyl (e.g. iso-butyl, n-butyl, tert-butyl, and/or sec-butyl), pentyl (e.g., iso-pentyl, neopentyl, and/or tert-pentyl), hexyl, dodecyl, hexadecyl as well as branched saturated hydrocarbon groups having from 6 to 18 carbon atoms. Examples of suitable aryl groups include phenyl, tolyl, xylyl, naphthyl, benzyl, and dimethyl phenyl. Examples of suitable alkenyl groups include vinyl, allyl, propenyl, isopropenyl, butenyl, isobutenyl, pentenyl, heptenyl, hexenyl, and cyclohexenyl groups. Examples of suitable monovalent halogenated hydrocarbon groups (i.e., halocarbon groups) include halogenated alkyl groups, aryl groups, and combinations thereof. Examples of halogenated alkyl groups include the alkyl groups described above where one or more hydrogen atoms is replaced with a halogen atom such as F or Cl. Specific examples of halogenated alkyl groups include fluoromethyl, 2-fluoropropyl, 3,3,3-trifluoropropyl, 4,4,4-trifluorobutyl, 4,4,4,3,3-pentafluorobutyl, 5,5,5,4,4,3,3-heptafluoropentyl, 6,6,6,5,5,4,4,3,3-nonafluorohexyl, and 8,8,8,7,7-pentafluorooctyl, 2,2-difluorocyclopropyl, 2,3-difluorocyclobutyl, 3,4-difluorocyclohexyl, and 3,4-difluoro-5-methylcycloheptyl, chloromethyl, chloropropyl, 2-dichlorocyclopropyl, and 2,3-dichlorocyclopentyl groups, as well as derivatives thereof. Examples of halogenated aryl groups include the aryl groups described above where one or more hydrogen atoms is replaced with a halogen atom, such as F or Cl. Specific examples of halogenated aryl groups include chlorobenzyl and fluorobenzyl groups.

In certain embodiments, R may comprise an ether moiety having the average formula - (OCₙH₂ₙ)ₘ-, where subscript n is independently selected from 2 to 4 in each moiety indicated by subscript m, and subscript m is from 1 to 200. Those skilled in the art readily understand that additional and/or alternative groups may exist in the ether moiety, which do not substantially diminish the utility or properties of the glycoside moiety of the silicon glycan. In certain embodiments, R may comprise a polyether having the formula -(OC₂H₄)_{q}(OC₃H₆)ᵣ(OC₄H₈)ₛ-, where subscripts q, r, and s are each independently from 0 to 200, with the proviso that 1≤ q+r+s≤ 600, and units indicated by subscripts q, r, and s may be in randomized or block form in the polyether. In specific embodiments, each of subscripts q, r, and s are each independently from 0 to 100, alternatively from 0 to 50, alternatively from 0 to 20. In certain embodiments, subscripts q, r, and s are each independently selected such that 1≤ q+r+s≤ 300, alternatively such that 1≤ q+r+s≤ 200, alternatively such that 1≤ q+r+s≤ 60. One of skill in the art will understand that the moieties indicated by subscripts m, q, r, and s above are oxyalkylene units, such that R comprises a polyoxyalkylene when any two or more such moieties are present therein. As such, R may be selected from polyoxyalkylene groups, i.e., moieties comprising multiple oxyalkylene units. In specific embodiments, each the oxyalkylene units indicated by subscripts q, r, and s, where present in R, may independently be branched or linear.

In certain embodiments, R may comprise an amine moiety, such as a tertiary amine moiety, a quaternary ammonium moiety (e.g. a trimethylammonium moiety), or combinations thereof. Tertiary amines have the formula -NR'₂, where each R' is independently selected from substituted and unsubstituted hydrocarbyl groups and ether moieties (e.g. any of the hydrocarbyl groups and ether moieties described herein), or where each R' is part of, and together form, a cyclic moiety such that the amine moiety comprises a heterocycle (e.g. an N-substituted piperidine, morpholine, etc.). Cations of such tertiary amine moieties are protonated or alkylated forms thereof, having the general formula - [N(R')₂H]⁺ or -[N(R')₃]⁺ where each R' is independently selected and as defined above. In such embodiments, depending on the particular R' selected, the glycoside moiety of the silicon glycan may comprise and/or be defined as a N,N-diethylaminoethyl hydroxyethylcellulose, N,N-dimethylaminoethyl hydroxyethylcellulose, N,N-diisopropylaminoethyl hydroxyethylcellulose, N,N-dimethylaminopropyl hydroxyethylcellulose, N-ethyl piperidine hydroxyethylcellulose, N-ethyl morpholine hydroxyethylcellulose, N-ethyl pyrrolidine hydroxyethylcellulose, or combinations thereof.

It is to be appreciated that each R may be the same as or different from any other R in the silicon glycan. Moreover, each R may comprise the same or different functional moieties therein. For example, in certain embodiments, each R is selected from H and alkyl groups, where each alkyl group is optionally substituted (e.g. terminally and/or pendantly) with one or more of the tertiary amino moieties and/or the polyoxyalkylene groups described above. In these embodiments, each R may be said to be selected from substituted or unsubstituted hydrocarbyl groups, ether moieties, amine moieties, and H, where one of skill in the art will understand, in view of this description, that substituted hydrocarbyl groups suitable for R may comprise ether and/or amine moieties. In specific embodiments, each R is independently selected from H, C₁-C₁₈ hydrocarbyl groups, polyoxyalkylene groups, and tertiary amino groups.

The silicon glycan may comprise substituents Z. More specifically, with reference to formula (I), each subscript o is independently 0 or 1, such that each saccharide moiety A indicated by subscripts x, y, and z may independently be substituted with substituent Z, which is described in further detail below. In certain embodiments, the silicon glycan comprises at least one saccharide moiety A indicated by subscript x where subscript o is 1. In these or other embodiments, the silicon glycan comprises at least one saccharide moiety A indicated by subscript x where subscript o is 0. In these or other embodiments, the silicon glycan comprises at least one saccharide moiety A indicated by subscript y where subscript o is 1. In some such embodiments, subscript o is 1 in each moiety indicated by subscript y. In these or other embodiments, subscript o is 1 in each moiety indicated by subscript z, as will be understood in view of the description herein.

In general, each Z is a divalent linking group comprising an ether moiety (hereinafter referred to as the "ether moiety Z"). More specifically, each ether moiety Z is independently selected, and may be any ether moiety including at least one, alternatively at least two, ether groups. Each ether moiety Z may be the same as any or each other ether moiety Z. Typically, the ether group(s) of each ether moiety Z have the formula -(CₜH₂ₜO)ᵤ-, where subscript t is independently selected from 2 to 4 in each moiety indicated by subscript u, and subscript u is from 1 to 50. In some embodiments, subscript u is from 1 to 25, alternatively from 1 to 10, alternatively from 1 to 5. In certain embodiments, subscript t is 2 and subscript u is 1, such that each ether moiety Z comprises an ethyl ether and the glycoside moiety of the silicon glycan may comprise and/or be defined as a hydroxyethyl cellulose. In some embodiments, subscripts o and ether moieties Z may be collectively selected such that the glycoside moiety of the silicon glycan may comprise and/or be defined as a carboxymethyl cellulose, an ethyl hydroxyethyl cellulose, a hydroxyethyl methyl cellulose, a hydroxypropyl methyl cellulose, or the like, or combinations thereof. In view of these examples, one of skill in the art will appreciate that ether moiety Z may comprise groups in addition to the ether group(s), such as divalent hydrocarbon linking groups (e.g. alkylene groups such as methylene, ethylene, or propylene linking groups).

The glycoside moiety of the silicon glycan may include aminoethyl saccharide moieties. In particular, with reference to formula (I), the silicon glycan may comprise saccharide moieties A indicated by subscript y, which each include the aminoethyl moiety of sub-formula -CH₂CH₂N(H)R¹, where R¹ is a hydrocarbyl group or H. More specifically, each R¹ is independently selected from substituted or unsubstituted hydrocarbyl groups and H. Examples of suitable hydrocarbyl groups include those described above with respect to substituent R. In certain embodiments, each R¹ is independently selected from H and alkyl groups, such that, when R¹ is alkyl, the aminoethyl moiety is further defined as an N-alkyl aminoethyl moiety. In particular embodiments, each R¹ is the same as one another. For example, in some such embodiments, each R¹ is H or a C₁-C₄ hydrocarbyl group. In specific embodiments, each R¹ is H. In some embodiments, each R¹ is ethyl or methyl.

In certain embodiments, some of the aminoethyl moieties are protonated, and thus of the sub-formula -CH₂CH₂-[N(H₂)R¹]⁺. The proportion of protonated aminoethyl moieties in the silicon glycan is limited only by the degree of aminoethyl substitution, and may be selected by one of skill in the art (e.g. during preparation of the silicon glycan, after preparation of the silicon glycan by combining an acid therewith, etc.).

With continued reference to formula (I), and as introduced above, the saccharide moieties A indicated by subscript z comprise a moiety of sub-formula -CH₂CH₂-W-Y, where each W is independently selected from the group consisting of an amide moiety and an imide moiety derived from reaction of an anhydride functional group bonded to a siloxane and an amino functional group bonded to a polysaccharide (hereinafter the "amide moiety W") and Y comprises an organosilicon moiety (hereinafter the "organosilicon moiety Y").

Each amide moiety W has a formula selected from the group consisting of: 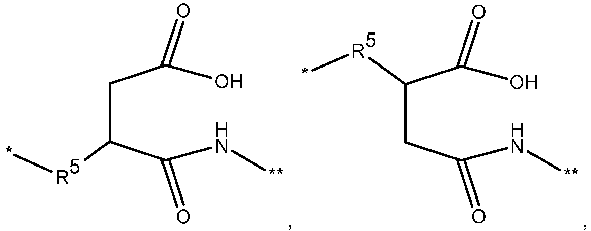 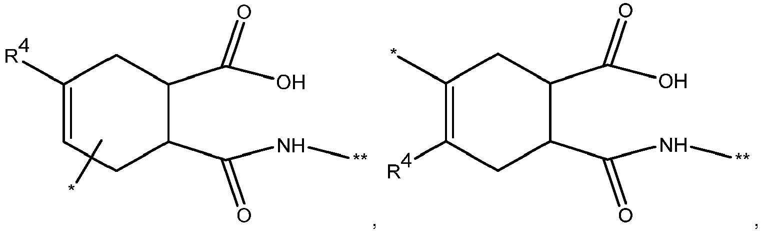 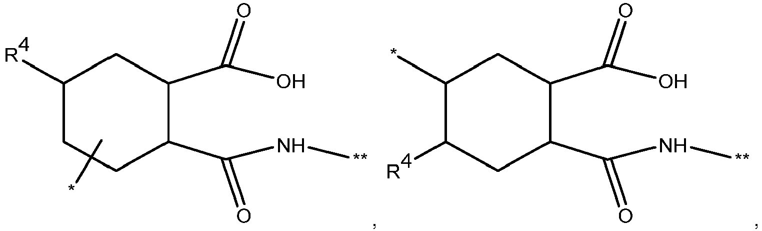 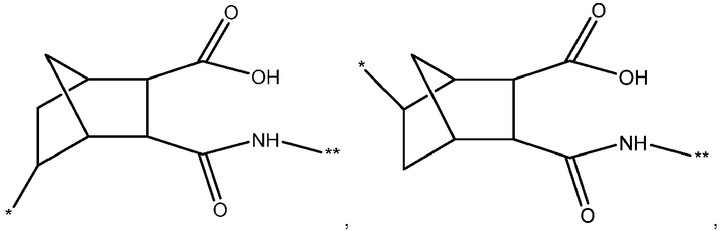 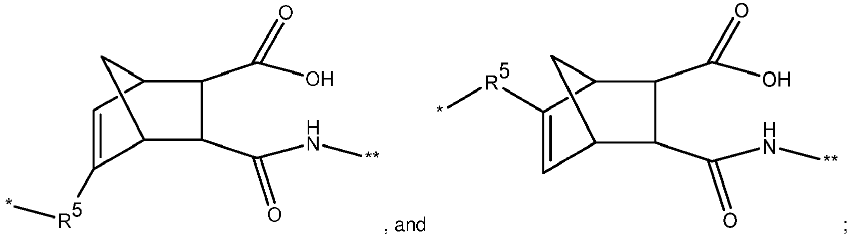 where
where R⁴ is selected from the group consisting of a hydrogen atom and an alkyl group, R⁵ is a divalent hydrodcarbon group, ** denotes a point of attachment to a carbon atom, and * denotes a point of attachment to organosilicon moiety Y. The alkyl group for R⁴ is exemplified by methyl, ethyl, propyl (including iso-propyl and/or n-propyl), butyl (including iso-butyl, n-butyl, tert-butyl and/or sec-butyl), pentyl (including iso-pentyl, neopentyl, and/or tert-pentyl), hexyl, dodecyl, and hexadecyl (including branched saturated hydrocarbon groups having from 6 to 18 carbon atoms). The divalent hydrocarbon group for R⁵ is exemplified by an alkylene group such as methylene, ethylene, or propylene; an arylene group such as phenylene, xylylene, or tolylene; and an alkylene-arylene group such as methylenephenylene or ethylenephenylene. Alternatively, R⁵ may be alkylene. Alternatively, amide moiety W may comprise a group selected from the group consisting of 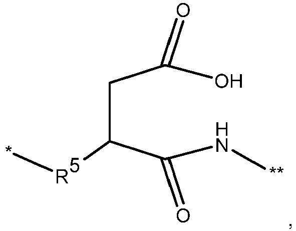 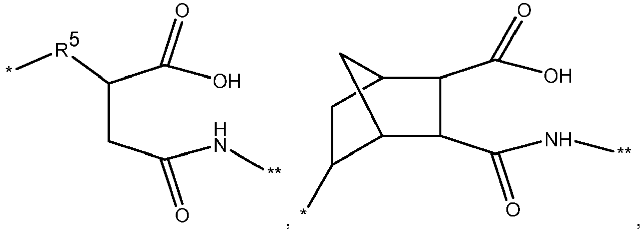 and 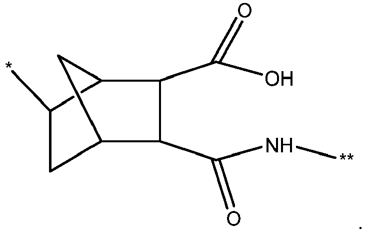 Alternatively, amide moiety W may be selected from the group consisting of

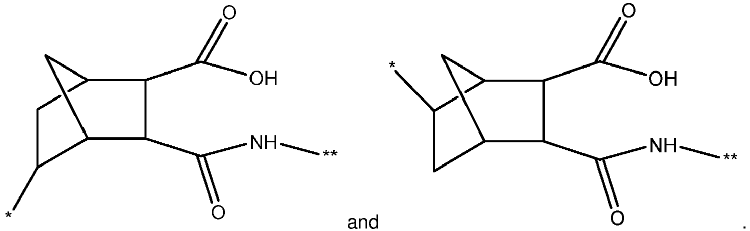

Each organosilicon moiety Y is independently selected, such that each organosilicon moiety Y may be the same as any or each other organosilicon moiety Y. In certain embodiments, each organosilicon moiety Y is the same as at least one, alternatively each, other organosilicon moiety Y. The organosilicon moiety Y is not generally limited in terms of structure and/or composition, and may be any moiety comprising at least one, alternatively at least two, organosilicon groups. For example, the organosilicon moiety Y may comprise an organosilyl group, an organosiloxane group, or combinations thereof. In certain embodiments, the organosilicon moiety Y is itself considered an organosilicon group.

In some embodiments, at least one, alternatively at least two, alternatively each organosilicon moiety Y comprises, alternatively is, a silane moiety. In such embodiments, the silane moiety typically has the general formula: 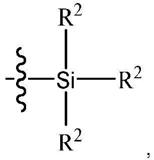 where each R² is independently selected from substituted or unsubstituted hydrocarbyl groups, alkoxy groups, and siloxy groups.

Each R² is independently selected, and may be linear, branched, cyclic, or combinations thereof. While independently selected from substituted or unsubstituted hydrocarbyl groups, alkoxy and siloxy groups, each R² may comprise a combination thereof, such as a combination of hydrocarbyl groups and siloxy groups, as will be appreciated from the description herein. Examples of suitable substituted or unsubstituted hydrocarbyl groups for use as R² are set forth above with respect to R of general formula (I). Examples of suitable alkoxy groups include those having the general formula -O-R, where R is as defined above. Specific examples of suitable alkoxy groups include methoxy, ethoxy, propoxy, butoxy, phenoxy, etc. Examples of suitable siloxy groups include [M], [D], [T], and [Q] units, which, as understood in the art, each represent structural units of individual functionality present in organopolysiloxanes. More specifically, [M] represents the monofunctional unit of general formula R³₃SiO_{1/2}; [D] represents the difunctional unit of general formula R³₂SiO_{2/2}; [T] represents the trifunctional unit of general formula R³SiO_{3/2}; and [Q] represents the tetrafunctional unit of general formula SiO_{4/2}, as shown by the general structural moieties below:

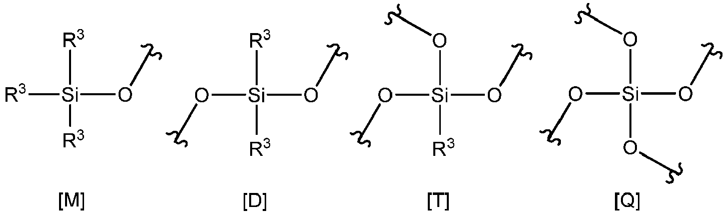

In these general structural moieties, each R³ is independently a monovalent or polyvalent substituent. As understood in the art, specific substituents suitable for each R³ are not limited, and may be monoatomic or polyatomic, organic or inorganic, linear or branched, substituted or unsubstituted, aromatic, aliphatic, saturated or unsaturated, and combinations thereof.

Typically, each R³ is independently selected from hydrocarbyl groups and siloxy groups. The hydrocarbyl group(s) represented by R³, when present, may be substituted or unsubstituted, and may be aliphatic, aromatic, cyclic, alicyclic, etc., as described above with respect to the examples of hydrocarbyl groups suitable for R, which are equally exemplary of those suitable for use with respect to R³. The siloxy group(s) represented by R³, when present, may be substituted or unsubstituted, and may comprise, alternatively may be, any combination of [M], [D], [T], and [Q] units (i.e., the silane moiety may comprise a branched and/or dendrimeric siloxane).

In some embodiments, at least one, alternatively at least two, alternatively each organosilicon moiety Y of the silicon glycan comprises, alternatively is, an organopolysiloxane. In such embodiments, the organopolysiloxane typically has the formula:

[R^{3'}₃SiO_{1/2}]ₐ[R^{3'}₂SiO_{2/2}]_{b}[R^{3'}SiO_{3/2}]_{c}[SiO_{4/2}]_{d},

where each R^{3'} is selected from the group consisting of R³ as defined above and a covalent bond to the amide moiety W, with the proviso that at least one R^{3'} is a bond to the amide or imide moiety W; and subscripts a, b, c, and d are each mole fractions such that a+b+c+d =1, with the proviso that a+b+c > 0.

It will be appreciated by those of skill in the art that the siloxy moieties indicated by subscripts a, b, c, and d correspond to [M], [D], [T], and [Q] siloxy units, respectively, as introduced and described above. In some embodiments, the organopolysiloxane comprises repeating [D] units, i.e., where subscript b>0. In these embodiments, subscript b is typically a value of from 0.3 to 1 (e.g. 0.3 ≤ b ≤ 1), such as from 0.3 to 0.9999, alternatively from 0.3 to 0.999, alternatively from 0.3 to 0.99, alternatively from 0.3 to 0.9, alternatively from 0.5 to 0.999, alternatively from 0.6 to 0.999, alternatively from 0.7 to 0.99, alternatively from 0.8 to 0.99, alternatively from 0.85 to 0.99, alternatively from 0.9 to 0.99. Subscript a is typically a value of from 0 to 0.1 (0 ≤ a ≤ 0.1), such as from 0 to 0.099, alternatively from 0 to 0.09, alternatively from 0 to 0.085, alternatively from 0 to 0.08, alternatively from 0 to 0.075, alternatively from 0 to 0.07, alternatively from 0 to 0.065, alternatively from 0 to 0.06, alternatively from 0 to 0.055, alternatively from 0 to 0.05, alternatively from 0.001 to 0.05, alternatively from 0.002 to 0.05, alternatively from 0.005 to 0.01. Subscripts c and d are typically each an independently selected value of from 0 to 0.1 (e.g. 0 ≤ c ≤ 0.1 and 0 ≤ d ≤ 0.1), such as from 0 to 0.09, alternatively from 0 to 0.075, alternatively from 0 to 0.05, alternatively from 0 to 0.025, alternatively from 0 to 0.009, alternatively from 0 to 0.001, alternatively from 0 to 0.0001. In certain embodiments, the organopolysiloxane comprises a linear siloxane segment, where subscript b is from 0.9 to 1, subscript a is from 0 to 0.1, and subscripts c and d are each 0. When the organopolysiloxane comprises repeating [D] units, the number of specific [D] units (i.e., the degree of polymerization, DP) in any one siloxane segment is not limited. Typically, such siloxane segments comprise from 1 to 700 repeating [D] units, such as from 2 to 600, alternatively from 2 to 500, alternatively from 5 to 400, alternatively from 5 to 300, alternatively from 10 to 250, alternatively from 10 to 200, alternatively from 15 to 150, alternatively from 15 to 100, alternatively from 15 to 50 repeating [D] units.

With respect to both the silane moiety and the organopolysiloxane described above (i.e., when either or both is utilized in or as the organosilicon moiety Y), the presence and proportion of [M], [D], [T], and [Q] units is independently selected, as is the particular substituent for each R³ of each silyl substituent of the silane moiety as well as for each R³ of any particular siloxy unit (e.g. those indicated by subscripts a, b, and c). For example, a proportion of [T] and [Q] units of or around 0 is typically selected to increase the linearity of the organopolysiloxane, such as when the organopolysiloxane is a linear organopolysiloxane. Such organopolysiloxanes are typically linear or substantially linear, but may include some branching attributable to [T] and/or [Q] units (e.g. where c + d > 0). Conversely, the proportion of [T] and/or [Q] units is selected to be greater than 0 when the organopolysiloxane is a resin. Accordingly, one of skill in the art will select the composition of the siloxane segments to control the composition of the organopolysiloxane, and thus the silicon glycan, e.g. based on a desired property of a particular organopolysiloxane, a desired/intended property and/or characteristic (e.g. physical, chemical, aesthetic, etc.) of any of: the silicon glycan; a particular phase (e.g. a non-aqueous, continuous, and/or silicone phase) of an emulsion prepared therewith and/or the emulsion itself; a formulation comprising the silicon glycan; a coating formed from such a formulation; and combinations thereof. For example, it may be desirable for the silicon glycan to have a high melting temperature and/or softening point, or for a formulation prepared therewith to be in a specific form (e.g. the form of a solid, gel, etc.), and selecting the composition of the organopolysiloxane of the silicon glycan may allow one of skill in the art to achieve a range of such desirable properties. In general, when linear siloxane segments are utilized in the organosilicon moiety Y, layers or coatings formed from compositions comprising the silicon glycan in accordance with the present disclosure will typically have improved feel (e.g. comfortable deposit) and flexibility as compared to embodiments where the organopolysiloxane includes increased branching attributable to [T] and/or [Q] units. When resinous organopolysiloxanes are used in or as the organosilicon moiety Y, products formed with/from the compositions comprising the silicon glycan in accordance with the present disclosure will typically have increased hardness and transfer resistance as compared to embodiments where more linear siloxane segments are utilized.

A method of preparing the silicon glycan is also provided, and is generally referred to hereinafter as the "preparation method". The preparation method comprises reacting (A) an aminoethyl polysaccharide and (B) an anhydride-functional organosilicon compound to give the silicon glycan.

As will be understood by one of skill in the art in view of the description herein, the aminoethyl polysaccharide (A) utilized in the preparation method forms a portion of the silicon glycan corresponding to the glycoside moiety described above. Similarly, the anhydride-functional organosilicon compound (B) utilized in the preparation method forms a portion of the silicon glycan corresponding to the organosilicon moiety Y. As described in additional detail below, the amide moiety W is generally formed by the reaction of components (A) and (B).

The aminoethyl polysaccharide (A) has the general formula (II): 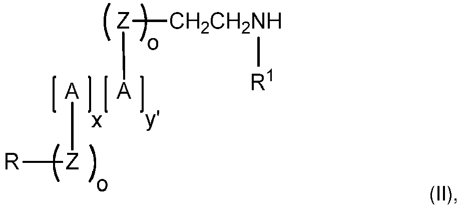 where each A, Z, R, R¹, and subscript o are independently selected and as defined above with respect to formula (I); subscript x is from ≥0 to <1; subscript y' is from >0 to 1, with the proviso that x+y'=1; and moieties indicated by subscripts x and y' may be in randomized or block form in the aminoethyl polysaccharide (A).

The aminoethyl polysaccharide (A) is not particularly limited, and generally corresponds to the glycoside moiety in formula (I) described above. For example, just as described above with respect to the saccharide moieties A indicated by subscript y of formula (I), each R¹ of the aminoethyl polysaccharide (A) of formula (II) is independently selected from hydrocarbyl groups and H. Likewise, in certain embodiments, at least one R¹ is an alkyl group (e.g. a C₁-C₄ alkyl group), such that the aminoethyl polysaccharide (A) may be further defined as an N-alkyl aminoethyl polysaccharide.

In certain embodiments, some of the aminoethyl moieties of the aminoethyl polysaccharide (A) (i.e., those represented by sub-formula -CH₂CH₂N(H)R¹ in general formula (II) above) are protonated, and thus of the sub-formula-CH₂CH₂-[N(H₂)R¹]⁺. The proportion of protonated aminoethyl moieties in the aminoethyl polysaccharide (A) is limited only by the degree of aminoethyl substitution, and may be selected by one of skill in the art (e.g. during preparation of the aminoethyl polysaccharide (A) by limiting the amount of neutralization thereof, after preparation of the aminoethyl polysaccharide (A) by combining an acid therewith, etc.).

Each of components (A) and (B) may be obtained or formed. In certain embodiments, the preparation method comprises preparing the aminoethyl polysaccharide (A). In particular, the preparation method may include reacting (A1) a hydroxyl-functional polysaccharide and (A2) an aziridinium halide compound to give the aminoethyl polysaccharide (A). In such embodiments, the aminoethyl polysaccharide (A) may be defined, or otherwise considered as, an intermediate in the preparation method of the silicon glycan.

As will be understood by one of skill in the art in view of the description herein, the hydroxyl-functional polysaccharide (A1) forms the polysaccharide portion of the aminoethyl polysaccharide (A), and ultimately the glycoside moiety of the silican glycan. As such, the description above with respect to the glycoside moiety applies equally to the hydroxyl-functional polysaccharide (A1), such that the hydroxyl-functional polysaccharide (A1) may comprise any of the oligosaccharides or polysaccharides described above. For example, the hydroxyl-functional polysaccharide (A1) may comprise, alternatively consist essentially of, a cellulose, a hemicellulose, a pectin, a glycogen, a hydrocolloid, a starch, a modified starch, or the like, or combinations thereof. In some embodiments, the hydroxyl-functional polysaccharide (A1) comprises a hydroxyalkyl cellulose ether. In such embodiments, the hydroxyl-functional polysaccharide (A1) may comprise a single type of hydroxyalkyl group, or more than one type of hydroxyalkyl group. For example, the hydroxyl-functional polysaccharide (A1) may comprise 2-hydroxyethyl groups, 2-hydroxypropyl groups, 3-hydroxypropyl groups, etc., or combinations thereof. In specific embodiments, the hydroxyl-functional polysaccharide (A1) comprises, alternatively is, a pullulan, mannan, galactomannan, xyloglucan, xanthan, hydroxyethyl cellulose, hydroxypropyl cellulose, carboxymethyl cellulose, ethyl hydroxyethyl cellulose, hydroxyethyl methyl cellulose, hydroxypropyl methyl cellulose, methyl cellulose, ethyl cellulose, and the like, as well as combinations thereof.

The hydroxyl-functional polysaccharide (A1) may comprise, alternatively may be, a modification/derivative (e.g. a modified and/or altered version) of one of the oligosaccharides or polysaccharides defined above, such as a hydrophobically modified polysaccharide, a cationically modified polysaccharide, a copolymerized polysaccharide, or a combination thereof. Specific examples of such polysaccharides include N,N-diethylaminoethyl hydroxyethylcelluloses, N,N-dimethylaminoethyl hydroxyethylcelluloses, N,N-diisopropylaminoethyl hydroxyethylcelluloses, N,N-dimethylaminopropyl hydroxyethylcelluloses, N-ethyl piperidine hydroxyethylcelluloses, N-ethyl morpholine hydroxyethylcelluloses, N-ethyl pyrrolidine hydroxyethylcelluloses, and the like, as well as derivatives, modifications, and combinations thereof.

In certain embodiments, the hydroxyl-functional polysaccharide (A1) is a hydroxyl ethyl cellulose. In such embodiments, the hydroxyl-functional polysaccharide A1 may be cationically, hydrophobically, and/or hydrophilically modified, e.g. via hydrocarbon moieties, polyoxyalkylene moieties, and/or amine moieties being appended thereto.

The degree of substitution of the hydroxyl-functional polysaccharide (A1) (e.g. with respect to the hydroxyl functionality, the number of hydroxyalkyl groups, the number of quaternary ammonium groups, etc., per saccharide moiety A therein) is determined by analysis of the hydroxyl-functional polysaccharide (A1). As understood by those of skill in the art, such analysis may include, for example, determining ethoxyl and/or hydroxyethoxyl substitution (e.g. when the hydroxyl-functional polysaccharide (A1) is a cellulose ether) via the Zeisel gas chromatographic (GC) technique outlined in ASTM test method D4794-94 (2017), determining methoxyl and/or hydroxypropoxyl substitution (e.g. when the hydroxyl-functional polysaccharide A1 is a cellulose ether) via the Zeisel GS technique as outlined in ASTM test method D3876 - 96(2013), etc., or combinations thereof. Such techniques are known in the art, and will be independently selected by one of skill in the art, e.g. based on the type of hydroxyl-functional polysaccharide (A1) being utilized, the functional groups appended thereto, the degree of substitution thereof, etc.

In certain embodiments, the hydroxyl-functional polysaccharide (A1) is a hydroxylalkyl cellulose ether having an average degree of substitution of from 0.50 to 4.0 C₁-C₆ alkyl ether groups per saccharide moiety A, such as from 0.5 to 2.5, alternatively from 0.5 to 3.5, alternatively from 1.0 to 2.5, alternatively from 1.5 to 2.5.

The hydroxyl-functional polysaccharide (A1) typically has a weight average molecular weight (M_{w}) of at least about 2500. In certain embodiments, the hydroxyl-functional polysaccharide (A1) has a M_{w} of at least 2500, alternatively at least 5000, alternatively at least 10,000, alternatively at least 25,000, alternatively at least 50,000, alternatively at least 75,000. In these or other embodiments, the hydroxyl-functional polysaccharide (A1) may have a M_{w} of from 70,000 to 3,000,000, such as from 100,000 to 1,500,000, alternatively of from 150,000 to 1,000,000. The weight average molecular weight may be readily determined using Gel Permeation Chromatography (GPC) equipped with Multi Angle Light Scattering (MALLS) detection techniques as described by W. Gao, X. M. Liu, and R. A. Gross, Polym. Int., 58, 1115-1119 (2009).

The aziridinium halide compound (A2) has the general formula: 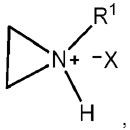 where R¹ is as defined above, and -X is chloride or bromide. As will be understood by those of skill in the art, the aziridinium halide compound (A2) forms the aminoethyl moiety of sub-formula -CH₂CH₂N(H)R¹ of the aminoethyl polysaccharide (A). As such the description above with respect to the scope and limitations of R¹ is equally applicable with respect to the aziridinium halide compound (A2). In certain embodiments, the aziridinium halide compound (A2) is selected from the chloride and/or bromide salt of a cation selected from aziridinium, N-methyl aziridinium, N-ethyl aziridinium, N-propyl aziridinium, N-butyl aziridinium, and combinations thereof. In specific embodiments, the aziridinium halide compound (A2) comprises, alternatively is, aziridinium chloride or N-methyl aziridinium chloride.

The aziridinium halide compound (A2) may be prepared or otherwise obtained by any method known by those of skill in the art. For example, the aziridinium halide compound (A2) may be formed in situ by neutralizing a halide salt of a corresponding beta haloethylamine with a stoichiometric amount of a base (e.g. NaOH, KOH, etc.).

The hydroxyl-functional polysaccharide (A1) and the aziridinium halide compound (A2) may be reacted in various amounts to form aminoethyl polysaccharide (A). Typically, component (A2) is utilized in at least a 1:1 stoichiometric ratio based on the number of hydroxyl groups of (A1) are to be alkylated. As such, the amount of the aziridinium halide compound (A2) is typically selected based on the amount, degree of polymerization, and/or degree of substitution of the hydroxyl-functional polysaccharide (A1), as will be understood by those of skill in the art. An excess, or gross excess, of component (A2) may be utilized in order to maximize the degree of aminoethyl substitution of the aminoethyl polysaccharide (A). For example, components (A1) and (A2) may be utilized in a 1:≥1 stoichiometric ratio (A1:A2), even where the degree of free hydroxyl substitution of component (A1) is ≤1. Higher or lower ratios may also be utilized.

The hydroxyl-functional polysaccharide (A1) and the aziridinium halide compound (A2) may be reacted under varying conditions, which are independently selected (e.g. in view of the particular hydroxyl-functional polysaccharide (A1) and/or aziridinium halide compound (A2) being utilized, the particular aminoethyl polysaccharide (A) to be formed, etc.). For example, the temperature and/or atmosphere of the reaction of components (A1) and (A2) may be independently selected. More specifically, components (A1) and (A2) may be reacted under ambient conditions, under a controlled atmosphere (e.g. under N₂, argon, etc.), at an elevated temperature (e.g. of > 25°C, such as from 30 to 150, alternatively from 30 to 100, alternatively from 50 to 100, alternatively from 70 to 100 alternatively from 50 to 85 °C), or combinations thereof. In certain embodiments, the reaction components (A1) and (A2) is performed for a time of from 30 minutes to 24 hours, such as from 1 to 12, alternatively from 2 to 6, hours. However, the particular time utilized may differ from these ranges, and will be selected based on the size/scale of the reaction, the particular components being reacted, and the other reaction conditions utilized, as understood by those of skill in the art.

The components (A1) and (A2) may be reacted in the presence of carrier fluid (e.g. a solvent, diluent, vehicle, or combinations thereof), such that the reaction is carried out in the solution, emulsion, suspension, slurry, biphasic mixture, or combinations thereof. The particular solvents, carriers, and/or diluents utilized, and the respective amounts thereof employed, will be independently selected by one of skill in the art, e.g. based on the particular hydroxyl-functional polysaccharide (A1) and/or aziridinium halide compound (A2) being utilized, the particular aminoethyl polysaccharide (A) to be formed, etc. For examples, it is understood by those of skill in the art that reactions of polysaccharides may be conducted heterogeneously, e.g. with the polysaccharide suspended, but not dissolved, in a polar organic diluent. However, the various components of the reaction may be employed as homogeneous mixtures (i.e., prior to forming a heterogeneous reaction mixture therewith).

Examples of components suitable for use in or as the carrier fluid, such as for use in or as a diluent in the reaction of components (A1) and (A2) generally include water-soluble polar organic solvents. In certain embodiments, the diluent comprises methanol, ethanol, 1-propanol, 2-propanol, 2-methyl-2-propanol, 2-butanone, tetrahydrofuran, acetone, or combinations thereof. However, additional and/or alternative carrier fluids and/or diluents may also be utilized, such as any of those described in further detail here.

The content of certain solvents (e.g. water, protonated solvents, etc.) in the reaction may be adjusted to effectuate swelling of the polysaccharide, especially when employing the diluent (e.g. in a heterogeneous reaction). As such, the amount of diluent, water, etc., within the reaction will be selected in view of the particular components (e.g. components (A1), (A2), the base, etc.) to achieve sufficient swelling of the hydroxyl-functional polysaccharide (A1) such that the alkylation thereof with the aziridinium halide compound (A2) may proceed accordingly.

The degree of aminoethyl substitution of the aminoethyl polysaccharide (A) may vary, and may be selected and/or controlled, e.g. by the degree of hydroxyl substitution of the hydroxyl-functional polysaccharide (A1), the equivalents of aziridinium halide compound (A2) utilized, the conditions under which (A1) and (A2) are reacted, etc. Typically, the aminoethyl polysaccharide (A) has average degree of substitution of from 0.05 to 1 aminoethyl groups per saccharide moiety A, such as from 0.075 to 0.75, alternatively from 0.075 to 0.6, alternatively from 0.09 to 0.6, alternatively from 0.1 to 0.6, alternatively from 0.1 to 0.5, alternatively from 0.15 to 0.45. The degree of aminoethyl substitution the aminoethyl polysaccharide (A) may be determined by various techniques, which are known in the art. For example, the nitrogen content of the aminoethyl polysaccharide (A) (e.g. as determined via the Kjeldahl method) may be utilized directly, or adjusted (e.g. based on the nitrogen content of the hydroxyl-functional polysaccharide (A1)) to ascertain the degree of aminoethyl substitution the aminoethyl polysaccharide (A).

The anhydride-functional organosilicon compound (B) has a formula selected from the group consisting of: 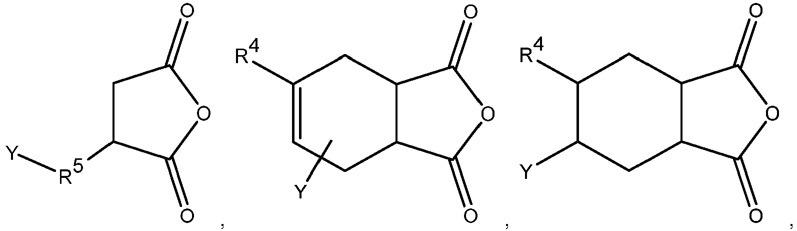 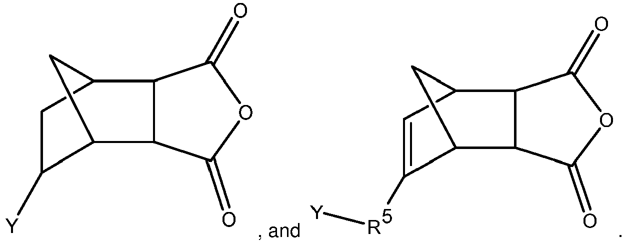 Alternatively, the anhydride-functional organosilicon compound may have formula 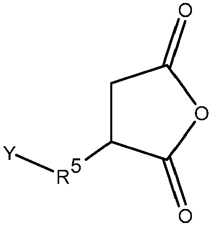 or 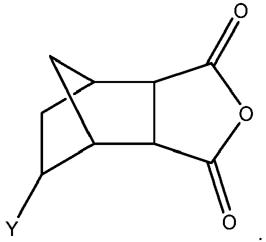 Alternatively, the anhydride-functional organosilicon compound may have formula 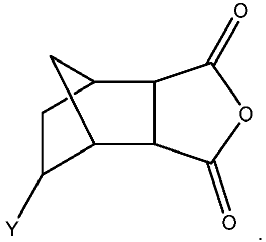 The groups R⁴ and R⁵ and organosilicon moiety Y of the anhydride-functional organosilicon compound (B) are equivalent to groups R⁴ and R⁵, and the organosilicon moiety Y, respectively, of the silicon glycan, i.e., as described above with respect to formula (I). As such, the organosilicon moiety Y of the anhydride-functional organosilicon compound (B) may comprise a silyl moiety, an organopolysiloxane moiety, or both. For example, when Y is a silyl moiety, anhydride-functional organosilicon compound (B) may have the formula: 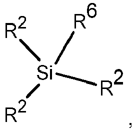 where each R² is independently selected and as defined above, and R⁶ is an anhydride moiety selected from the group consisting of 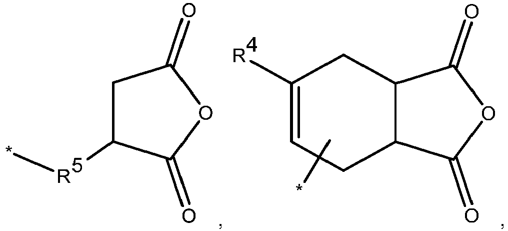 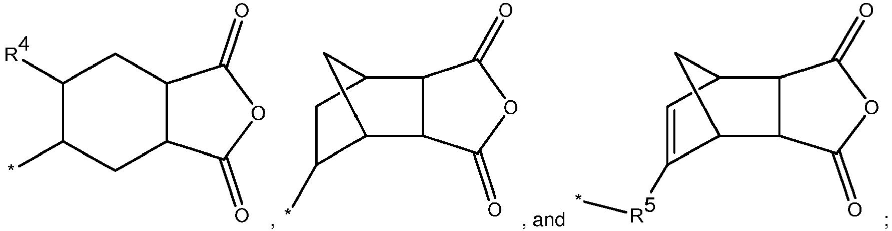 where R⁴ and R⁵ are as described above, and * denotes a point of attachment to a silicon atom in organosilicon moiety Y. Alternatively, R⁶ may be an anhydride moiety selected from the group consisting of 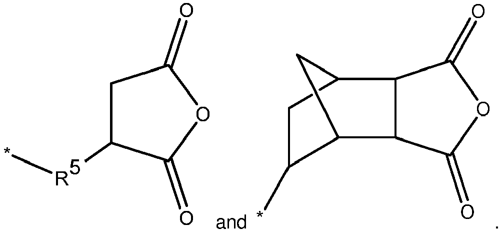 Alternatively, R⁶ may be

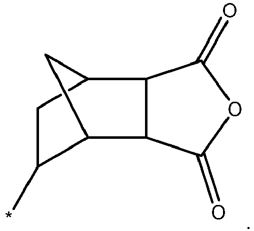

Alternatively, the anhydride-functional organosilicon compound (B) may have the formula: [R³3SiO_{1/2}]ₐ[R³₂SiO_{2/2}]_{b}[R³SiO_{3/2}]_{c}[SiO_{4/2}]_{d} where subscripts a, b, c, and d, and each R³ is independently selected and as defined above, with provisos that a+b+c > 0 and at least one R³, per molecule, is a bond to an anhydride moiety R⁶, as described above. Alternatively, the anhydride-functional organosilicon compound (B) may have 1 to 20 anhydride moieties per molecule, alternatively 1 to < 20 anhydride moieties per molecule.

Not wishing to be bound by a particular synthesis process, anhydride-functional organopolysiloxanes suitable for use herein can be prepared by known methods such as those disclosed in U.S. Patent 5,015,700. Bis-anhydride group terminated polydiorganosiloxanes, such as polydimethylsiloxanes terminated with groups of formula R⁶Me₂SiO_{1/2}, where Me represents a methyl group and R⁶ represents an anhydride-functional group; and organopolysiloxanes having pendant anhydride functional groups such as trimethylsiloxy-terminated poly(methyl,anhydride-functional group)siloxanes and trimethylsiloxy-terminated poly(methyl,anhydride-functional group/dimethyl)siloxanes, and comparable organopolysiloxanes having both terminal and pendant anhydride-functional groups are disclosed in this patent. Other anhydride-functional linear siloxanes, such as tetrahydrophthalic anhydride terminated polydiorganosiloxanes and methods for their preparation, are known, for example, in U.S. Patent 5,117,001.

Anhydride-functional silicone resins suitable for use herein and methods for their preparation are disclosed in U.S. Patents 7,727,595 and 7,807,012 at col. 5, line 45 to col. 6, line 59. For example, anhydride functional silicone resins can be prepared by first preparing a SiH functional resin intermediate followed by hydrosilation of the SiH functional resin intermediate with 2-methyl-3-butyn-2-ol, dehydration to form a diene functionality, and Diels Alder addition of maleic anhydride. Anhydride-functional silsesquioxane resins and methods for their preparation are also disclosed in U.S. Patent Application 2008/0071017, which is hereby incorporated by reference.

Other examples of suitable methods for preparing anhydride-functional organopolysiloxanes include hydrosilylation reaction of aliphatically unsaturated anhydride compounds (such as carbic anhydride, maleic anhydride, or allyl succinic anhydride) and intermediates containing silicon bonded hydrogen atoms in the presence of platinum catalysts or radical reaction of an organopolysiloxane having unsaturated groups (e.g. alkenyl groups) and an unsaturated anhydride compound in the presences of a free radical initiator or photoinitiator. Examples of anhydride-functional organopolysiloxanes produced by a radical initiated reaction of an organopolysiloxane having unsaturated groups (e.g. alkenyl groups) and an unsaturated anhydride compound in the presences of a free radical initiator or photoinitiator may be prepared as described in U.S. Provisional Patent Application Serial No. 62/703995 filed on 27 July 2018, which is hereby incorporated by reference.

The aminoethyl polysaccharide (A) and the anhydride-functional organosilicon compound (B) may be reacted in various amounts to form the silicon glycan. Typically, component (B) is utilized in a 1:1, alternatively 1:1 to 1:0.1 stoichiometric ratio based on the number of ethylamino groups of component (A) are to be alkylated, e.g. via ring-opening addition of the of the ethylamino group amine of component (A) to the anhydride functional group of component (B), thereby forming the amide moiety, W, described above. As such, the amount of anhydride-functional organosilicon compound (B) is typically selected based on the amount, degree of polymerization, and/or degree of substitution of the aminoethyl polysaccharide (A), as will be understood by those of skill in the art. An excess, or gross excess, of component (B) may be utilized in order to maximize the degree of silicon substitution of the silicon glycan. For example, components (A) and (B) may be utilized in a 1:≥1 stoichiometric ratio (A:B), even where the degree of aminoethyl substitution of component (A) is ≤1. Higher or lower ratios may also be utilized. For example, in some embodiments, components (A) and (B) may be utilized in a ≥1:1 stoichiometric ratio (A:B), e.g. to increase the relative grafting efficiency of the anhydride-functional organosilicon compound (B) onto the aminoethyl polysaccharide (A).

The aminoethyl polysaccharide (A) and the anhydride-functional organosilicon compound (B) may be reacted under varying conditions, which, as will be appreciated by those of skill in the art, may be independently selected (e.g. in view of the particular compounds (A) and/or (B) being utilized, the particular silicon glycan to be formed, the size of the reaction, etc.). For example, the temperature and/or atmosphere of the reaction of components (A) and (B) may be independently selected. More specifically, components (A) and (B) may be reacted under ambient conditions, under a controlled atmosphere (e.g. under N₂, argon, etc.), at an elevated temperature (e.g. of > 25 °C, such as from from 30 to 100, alternatively from 50 to 100, alternatively from 50 to 90, alternatively from 60 to 80 °C), or combinations thereof. The reaction temperature is selected based on the particular components of the reaction, and thus may be chosen to minimize evaporative loss (e.g. of a volatile component), achieve reflux (i.e., when performed in a suitable reactor), drive off volatile components, or combinations thereof (e.g. via employment of temperature ramping). For examle, the reaction may be carried out at ambient and/or room temperature (e.g. from 20 to about 30, alternatively from 22 to 28, alternatively from 24 to 26 °C). Alternatively, the reaction may be carried out at 60 to 100 °C.

The aminoethyl polysaccharide (A) and the anhydride-functional organosilicon compound (B) may be reacted for any amount of time, such as a time of from 30 minutes to 100 hours. For example, in certain embodiments, the reaction components (A) and (B) is performed for a time of from 4 to 48 hours, such as a time of 5, 8, 12, 16, 20, 24, 28, 32, 36, 40, 44, or 47 hours. In some embodiments, a time of from 48 to 100 hours is utilized, such as a time of 50, 60, 70, 80, or 90 hours. However, the particular time utilized may differ from these ranges, and will be selected based on the size/scale of the reaction, the particular components (A) and (B) utilized, and the other reaction conditions selected, as understood by those of skill in the art. In particular embodiments, the reaction components (A) and (B) is performed for a time of from 0.5 to 24 hours, such as from 1 to 18, alternatively from 1 to 12, alternatively from 1 to 6 hours.

The components (A) and (B) may be reacted under a heterogeneous condition, e.g. such as in a multiphase (e.g. biphasic) reaction. Typically, components (A) and (B) are reacted heterogeneously in the presence of a diluent, which may be a multicomponent diluent. In general, the diluent is selected to swell, but not dissolve, the aminoethyl polysaccharide (A), to function as a carrier for component (B), or both. As such, the specific components of the diluent are selected based on the particular aminoethyl polysaccharide (A) utilized (e.g. depending on the solubility, swellability, and/or reactivity thereof) and/or the particular organosilicon compound (B) being utilized (e.g. the solubility and/or functionality of the organosilicon moiety thereof).

The diluent typically comprises an organic solvent. Examples of organic solvents include those comprising an alcohol, such as methanol, ethanol, isopropanol, butanol, and n-propanol; a ketone, such as acetone, methylethyl ketone, and methyl isobutyl ketone; an aromatic hydrocarbon, such as benzene, toluene, and xylene; an aliphatic hydrocarbon, such as heptane, hexane, and octane; a glycol ether, such as propylene glycol methyl ether, dipropylene glycol methyl ether, propylene glycol n-butyl ether, propylene glycol n-propyl ether, and ethylene glycol n-butyl ether; a halogenated hydrocarbon, such as dichloromethane, 1,1,1-trichloroethane and methylene chloride; chloroform; dimethyl sulfoxide; dimethyl formamide, acetonitrile; tetrahydrofuran; white spirits; mineral spirits; naphtha; N-methylpyrrolidone; and the like, as well as derivatives, modifications, and combination thereof. Typically, the organic solvent is a polar organic solvent, such as a solvent compatible with water. Specific examples of such polar organic solvents utilized in certain embodiments include methanol, ethanol, 1-propanol, 2-propanol, 2-methyl-2-propanol, 2-butanone, tetrahydrofuran, acetone, and combinations thereof.

In some embodiments, the diluent comprises a silicone fluid. In such embodiments, the silicone fluid is typically a low viscosity and/or volatile siloxane, such as a low viscosity organopolysiloxane, a volatile methyl siloxane, a volatile ethyl siloxane, a volatile methyl ethyl siloxane, or the like, or combinations thereof. Typically, the silicone fluid has a viscosity at 25 °C in the range of 1 to 1,000 mm²/sec. In some embodiments, the silicone fluid comprises a silicone having the general formula (R⁴R⁵SiO)ₑ, where each R⁴ and R⁵ is independently selected from H and substituted or unsubstituted hydrocarbyl groups, and subscript e is from 3 to 8. Specific examples of suitable silicone fluids include hexamethylcyclotrisiloxane, octamethylcyclotetrasiloxane, decamethylcyclopentasiloxane, dodecamethylcyclohexasiloxane, octamethyltrisiloxane, decamethyltetrasiloxane, dodecamethylpentasiloxane, tetradecamethylhexasiloxane, hexadeamethylheptasiloxane, heptamethyl-3-{(trimethylsilyl)oxy)}trisiloxane, hexamethyl-3,3, bis{(trimethylsilyl)oxy}trisiloxane pentamethyl{(trimethylsilyl)oxy}cyclotrisiloxane as well as polydimethylsiloxanes, polyethylsiloxanes, polymethylethylsiloxanes, polymethylphenylsiloxanes, polydiphenylsiloxanes, caprylyl methicone, hexamethyldisiloxane, heptamethyloctyltrisiloxane, hexyltrimethicone, and the like, as well as derivatives, modifications, and combinations thereof. Additional examples of suitable silicone fluids include polyorganosiloxanes with suitable vapor pressures, such as from 5 x 10⁻⁷ to 1.5 x 10⁻⁶ m²/s. The diluent typically further comprises a polar component, which typically includes water or another polar compound (e.g. dimethylacetamide, hexamethylphosphoramide, hexafluoroisopropanol, dimethylsulfoxide, etc.). The particular content of the polar component of the diluent is adjusted to effectuate swelling of the polysaccharide of component (A). As such, the amount of diluent, the ratio of polar to non-polar or other organic solvent of the diluent, and the ratio of the polar component to components (A) and/or (B), etc., within the reaction will be independently or collectively selected to achieve sufficient swelling of the aminoethyl polysaccharide (A) to facilitate grafting of the organosilicon compound (B) thereto. Likewise, the diluent may comprise one or more additives, which may be independently selected to increase and/or decrease the solubility and/or compatibility of any component of the reaction with the diluent. In certain embodiments, the polar component comprises water. In these or other embodiments, the polar component comprises dimethylacetamide, hexamethylphosphoramide, hexafluoroisopropanol, and/or dimethylsulfoxide.

In certain embodiments, the diluent may comprise a protic organic solvent. Examples of protic organic solvents include those comprising an alcohol, such as methanol, ethanol, isopropanol, butanol, and n-propanol. The protic organic solvent is compatible with water. Specific examples of such protic organic solvents include methanol, ethanol, 1-propanol, 2-propanol, 2-methyl-2-propanol, and combinations thereof. The diluent may further comprise water. Alternatively, the diluent may comprise an alcohol, water, or a combination of both the alcohol and water.

In certain embodiments, the reaction mixture may be free of polar aprotic solvent, i.e., where "free of polar aprotic solvent" means that the reaction mixture contains 0 to 1% of a polar aprotic solvent, alternatively a non-detectable amount to 1% of a polar aprotic solvent (such as methyl isobutyl ketone).

Without wishing to be bound by theory, it is thought that choice of solvent may impact silicon content of the silicon glycan product produced by the method described herein. A protic organic solvent may be used to provide a silicon glycan with a higher silicon content than when a polar aprotic solvent is used in the method. Alternatively, mixtures of solvents may be used in the method.

In certain embodiments, the diluent may comprise a protic organic solvent. Examples of protic organic solvents include those comprising an alcohol, such as methanol, ethanol, isopropanol, butanol, and n-propanol. The protic organic solvent is compatible with water. Specific examples of such protic organic solvents include methanol, ethanol, 1-propanol, 2-propanol, 2-methyl-2-propanol, and combinations thereof. The diluent may further comprise water. Alternatively, the diluent may comprise an alcohol, water, or a combination of both the alcohol and water.

In certain embodiments, the reaction mixture may be free of polar aprotic solvent, i.e., where "free of polar aprotic solvent" means that the reaction mixture contains 0 to 1% of a polar aprotic solvent, alternatively a non-detectable amount to 1% of a polar aprotic solvent (such as methyl isobutyl ketone).

Without wishing to be bound by theory, it is thought that choice of diluent may impact silicon content of the silicon glycan product produced by the method described herein. A protic organic solvent may be used to provide a silicon glycan with a higher silicon content than when a polar aprotic solvent is used in the method. Alternatively, a mixture of diluents may be used in the method.

In certain embodiments, reacting the aminoethyl polysaccharide (A) and the anhydride-functional organosilicon compound (B) gives a reaction product comprising the silicon glycan, and the preparation method includes isolating the silicon glycan from the reaction product. In such embodiments, any suitable technique and/or protocol for isolation may be utilized. Examples of suitable isolation techniques include decanting, distilling, evaporating, extracting, filtering, freeze drying, ion exchange chromatography (e.g. adsorption), simulated moving bed chromatography, partitioning, phase separating, stripping, and washing. As will be understood by those of skill in the art, many of these techniques may be used in combination (i.e., sequentially) with one another to isolate the silicon glycan. It is to be appreciated that isolating may include, and thus may be referred to as, purifying the silicon glycan. As used herein, isolating the silicon glycan is typically defined as increasing the relative concentration of the silicon glycan as compared to other compounds in combination therewith. As such, as is understood in the art, isolating/purifying may comprise removing the other compounds from such a combination (i.e., decreasing the amount of impurities combined with the silicon glycan) and/or removing the silicon glycan itself from the combination. Regardless of the particular technique(s) selected, purification of the silicon glycan may be performed in sequence (i.e., in line) with the reaction itself, and thus may be automated. In other instances, purification may be a stand-alone procedure to which the reaction product comprising the silicon glycan is subjected.

In particular embodiments, isolating the silicon glycan comprises altering the solubility profile of the diluent, e.g. by adding additional organic solvent (e.g. acetone) thereto, to partition and/or phase separate the reaction product. In these or other embodiments, isolating the silicon glycan comprises filtering away other components of the reaction product (i.e., where the silicon glycan is present in the residue/solids. In these or other embodiments, isolating the silicon glycan comprises washing away other components of the reaction product from the silicon glycan (e.g. with organic and/or aqueous solvents). In certain embodiments, isolating the silicon glycan comprises stripping solvents and/or other volatile components therefrom, which encompasses drying the silicon glycan (e.g. when water is being removed).

As will be understood in view of the Examples herein, the silicon glycan may be used in an industrial composition, such as in a drilling fluid, to modify the rheology thereof. Alternatively, the silicon glycan may be used in a personal care product.

### Personal Care Products

The silicon glycan may be formulated into personal care products. Generally, such products can be prepared at room temperature, if no materials which are solid at room temperature are present, using simple propeller mixers, Brookfield counter-rotating mixers, or homogenizing mixers. No special equipment or processing conditions are typically required. Depending on the type of form made, the method of preparation will be different, but such methods are known in the art.

The personal care products may be functional with respect to the portion of the body to which they are applied, cosmetic, therapeutic, or some combination thereof. Conventional examples of such products include, but are not limited to: antiperspirants and deodorants, skin care creams, skin care lotions, moisturizers, facial treatments such as acne or wrinkle removers, personal and facial cleansers, bath oils, perfumes, colognes, sachets, sunscreens, pre-shave and after-shave lotions, shaving soaps, and shaving lathers, hair shampoos, hair conditioners (either leave in or rinse off), hair colorants, hair relaxants, hair styling aids such as sprays, fixatives, mousses, and/or gels; permanents, depilatories, and cuticle coats, make-ups, color cosmetics, foundations, concealers, blushes, lipsticks, eyeliners, mascara, oil removers, color cosmetic removers, powders, medicament creams, pastes or sprays including dental hygienic, antibiotic, healing promotive, and/or nutritive, which may be preventative and/or therapeutic. In general the personal care products may be formulated with a carrier that permits application in any conventional form, including but not limited to liquids, rinses, lotions, creams, pastes, gels, foams, mousses, ointments, sprays, aerosols, soaps, sticks, soft solids, solid gels, and gels. What constitutes a suitable carrier would be apparent to one of ordinary skill in the art.

The silicon glycan can be used in a variety of personal, household, and healthcare applications. In particular, the silicon glycan may be used in the personal care products disclosed in U.S. Patent 6,051,216 to Barr et al.; U.S. Patent 5,919,441 to Mendolia et al.; U.S. Patent 5,981 ,680 to Petroff et al.; U.S. Patent Application 2010/0098648 to Yu; and WO 2004/060101 to Yu; in sunscreen compositions as disclosed in U.S. Patent 6,916,464 to Hansenne et al.; in cosmetic compositions also containing film-forming resins, as disclosed in WO2003/105801 to Yu; in cosmetic compositions as disclosed in U.S. Patent Application 2003/0235553 to Lu, U.S. Patent Application 2003/0072730 to Tornilhac, U.S. Patent Application 2003/0170188 to Ferrari et al., EP 1,266,647 to Tornilhac, EP 1,266,648 to Ferrari, et al., EP1,266,653 to Ferrari et al., WO2003/105789 to Lu, WO2004/000247 to Lu and WO2003/106614 to Lu; as additional agents to those disclosed in WO2004/054523 to Tournilhac; in long wearing cosmetic compositions as disclosed in U.S. Patent Application Publication 2004/0180032; and in transparent or translucent care and/or make up compositions as discussed in WO 2004/054524;

Alternatively, the silicon glycan can be used as part of colorant or fixative compositions and applied as pre-, during- , post-treatment in the process of coloring or perming hair. The purposes could range from color retention and color enhancement to again conditioning of the colored hair fibers. Examples can be found in the patent publications U.S. Patent Application Publication 2003/0152534 to Legrand et al., U.S. Patent Application Publication 2003/0152541 to Legrand et al., U.S. Patent Application Publication 2003/0147840 to Legrand et al., U.S. Patent 6,953,484 to Devin-Baudoin et al., U.S. Patent 6,916,467 to Devin-Baudoin et al., U.S. Patent Application Publication 2004/0045098 to Devin-Baudoin et al., U.S. Patent Application Publication 2003/0126692 to Devin-Baudoin et al., PCT Publication WO2007/071684 to Audousset, and U.S. Patent Application Publication 2008/0282482 to Audousset, et al by L'Oreal and U.S. Patent 7,335,236 to McKelvey by Noxell Corp.,

The personal care products according to this invention can be used by standard methods, such as applying them to the human body, e.g., skin or hair, using applicators, brushes, applying by hand, pouring them and/or possibly rubbing or massaging the product onto or into the body. Removal methods, for example for color cosmetics are also well known standard methods, including washing, wiping, and peeling. For use on the skin, the personal care products according to the present invention may be used in a conventional manner, for example, for conditioning the skin. An effective amount of the product for the purpose is applied to the skin. Such effective amounts generally range from 1 mg/cm² to 3 mg/cm². Application to the skin typically includes working the composition into the skin. This method for applying to the skin comprises the steps of contacting the skin with the composition in an effective amount and then rubbing the composition into the skin. These steps can be repeated as many times as desired to achieve the desired benefit.

The use of the personal care products according to the invention on hair may use a conventional manner for conditioning hair. An effective amount of the product for conditioning hair is applied to the hair. Such effective amounts generally range from 0.5 g to 50 g, alternatively from 1 g to 20 g. Application to the hair typically includes working the composition through the hair such that most or all of the hair is contacted with the product. This method for conditioning the hair comprises the steps of applying an effective amount of the hair care product to the hair, and then working the composition through the hair. These steps can be repeated as many times as desired to achieve the desired conditioning benefit.

Non-limiting examples of additives which may be formulated into the personal care products in addition to the silicon glycan include: (i) additional silicones, (ii) anti-acne agents, (iii) anti-carie agents, (iv) anti-dandruff agents, (v) anti-oxidants, (vi) biocides, (vii) botanicals, (viii) cleansing agents, (ix) colorants, (x) conditioning agents, (xi) deposition agents such as cationic deposition aids, (xii) electrolytes, (xiii) emollients, (xiv) exfoliating agents, (xv) foam boosters, (xvi) fragrances, (xvii) humectants, (xviii) occlusive agents, (xix) oils, (xx) pediculicides, (xxi) pH control agents, (xxii) pigments, (xxiii) preservatives, (xxiv) rheology-modifying agents, (xxv) solvents, (xxvi) stabilizers, (xxvii) stabilizing agents, (xxviii) sun-screening agents, (xxix) surfactants, (xxx) suspending agents, (xxxi) tanning agents, (xxxii) thickening agents, (xxxiii) vitamins, (xxxiv) waxes, (xxxv) wound healing-promotion agents, and (xxxvi) any two or more of (i) to (xxxv).

It is to be understood that the appended claims are not limited to express and particular compounds, compositions, or methods described in the detailed description, which may vary between particular embodiments which fall within the scope of the appended claims. With respect to any Markush groups relied upon herein for describing particular features or aspects of various embodiments, different, special, and/or unexpected results may be obtained from each member of the respective Markush group independent from all other Markush members. Each member of a Markush group may be relied upon individually and or in combination and provides adequate support for specific embodiments within the scope of the appended claims.

Further, any ranges and subranges relied upon in describing various embodiments of the present invention independently and collectively fall within the scope of the appended claims, and are understood to describe and contemplate all ranges including whole and/or fractional values therein, even if such values are not expressly written herein. One of skill in the art readily recognizes that the enumerated ranges and subranges sufficiently describe and enable various embodiments of the present invention, and such ranges and subranges may be further delineated into relevant halves, thirds, quarters, fifths, and so on. As just one example, a range "of from 0.1 to 0.9" may be further delineated into a lower third, i.e., from 0.1 to 0.3, a middle third, i.e., from 0.4 to 0.6, and an upper third, i.e., from 0.7 to 0.9, which individually and collectively are within the scope of the appended claims, and may be relied upon individually and/or collectively and provide adequate support for specific embodiments within the scope of the appended claims. In addition, with respect to the language which defines or modifies a range, such as "at least," "greater than," "less than," "no more than," and the like, it is to be understood that such language includes subranges and/or an upper or lower limit. As another example, a range of "at least 10" inherently includes a subrange of from at least 10 to 35, a subrange of from at least 10 to 25, a subrange of from 25 to 35, and so on, and each subrange may be relied upon individually and/or collectively and provides adequate support for specific embodiments within the scope of the appended claims. Finally, an individual number within a disclosed range may be relied upon and provides adequate support for specific embodiments within the scope of the appended claims. For example, a range "of from 1 to 9" includes various individual integers, such as 3, as well as individual numbers including a decimal point (or fraction), such as 4.1, which may be relied upon and provide adequate support for specific embodiments within the scope of the appended claims.

### EXAMPLES

The following examples are intended to illustrate the invention and are not to be viewed in any way as limiting to the scope of the invention. The starting materials used in the Examples were as follows: Deuterium oxide (99% D), deuterated chloroform (CDCl₃), and cis-5-norbornene-endo-2,3-dicarboxylic acid (carbic anhydride), maleic anhydride, and benzoyl peroxide were purchased from Sigma-Aldrich and used as received. 2-Propanol (IPA), acetone, m-xylene and toluene were purchased from Fisher Scientific and used as received. a vinyl terminated polydimethylsiloxane (PDMS) oligomer with a number average structure M^{Vi}-D₉-M^{Vi} (4-2764 INT), MD'M (3-7010), and Karstedt's catalyst were obtained from Dow Silicones Corporation and used as received. Copolymers having number average structures MD₁₀D'M and MD₄₀D'M were prepared according to conventional procedures. Narrow dispersity mono-functional M^{Bu}D₁₀D'M was acquired from Gelest and used without further purification. In the formulae above, M represents a unit of formula (Me₃SiO_{1/2}), M^{Vi} represents a unit of formula (Me₂ViSiO_{1/2}), M^{Bu} represents a unit of formula (Me₂BuSiO_{1/2}), D represents a unit of formula (Me₂SiO_{2/2}), and D' represents a unit of formula MeHSiO_{2/2}), where Me represents a methyl group, Vi represents a vinyl group and Bu represents a butyl group.

### X-Ray Fluorescence (XRF):

All samples are analyzed using a Rigaku Primus I Wavelength Dispersive X-ray Fluorescence (WDXRF) spectrometer (the "XRF instrument").

### Full Scan - Relative Abundance

The XRF instrument is equipped with 4 kW max Rh target x-ray source with primary beam filters: Ni400 for Rh K-line overlaps (Ru, Rh, Pd, Ag, Cd, In, and Sn K-lines), Al25 for Rh L-line overlaps (Ru, Rh, Pd, Ag, Cd, In, and Sn L-lines), and Be30 for x-ray tube protection of delicate samples. Analyzing crystals include LiF200 (K-U), PET (Al-Si), Ge (P-Cl), RX25 (F-Mg), RX35 (O), RX45 (N), RX61F (C), and RX75 (B). The detectors include a scintillation counter (SC) for Ti-U and a gas (flow) proportional counter for B-Ca.

Unless otherwise specified, samples are loaded into sample cups containing a 6 µm polypropylene thin-film window, and are analyzed using a 30 mm sample mask in a helium environment. The relative abundance of each element detected in the samples is calculated against a 1-point calibration with the matrix compound identified. The film impurities, as identified by the manufacturer, include: Al, P, Ca, Ti, Fe, Cu, Zn, and Zr. The samples are analyzed in vacuum using a 30 mm sample mask and the conditions described above.

### Attenuated Total Reflectance infrared (ATR-IR):

All samples are analyzed using a Thermo Scientific Nicolet 6700 Fourier-transform infrared (FTIR) spectrometer.

Samples are examined by IR spectroscopy (using 64 scans at 4 cm⁻¹ resolution) using a single bounce Attenuated Total Reflectance attachment equipped with a diamond crystal. Depth of penetration during the surface analysis is estimated to be 2 microns near 1000 cm⁻¹.

### Rheology

The rheological measurements are performed using a TA Instruments DHR-3 rheometer equipped with a cup and bob sensor, using a 40 mm cone and plate at 25 °C.

Each sample (0.2 g) is dissolving in H₂O (9.8 g) to give a 2% solution, which is stirred at 70 °C for 18 h then left to cool down naturally. If the sample is insoluble in the H₂O, it is heated to 85 °C for several hours. If the sample remains insoluble, acetic acid (1 equiv.) is added to the solution, which is then allowed to stand for 24 h.

The solution is then sheared (ultrasound sonicator; 100 W power for 60 seconds). The sample is pre-sheared (40 seconds at a shear rate of 1 s⁻¹) and the viscosity measured at 1 second intervals over 40 seconds. The viscosity is reported in mPa·s as the average value for all data points measured at a shear rate of 6.31 s⁻¹.

### Solubility

The solubility of the material as a 2% water solution is tested by attempting to dissolve the material in water. If the material is insoluble, it is heated to 85 °C for several hours.

### Reference Example 1 - Preparation of Anhydride-Functional Siloxane

The starting hydridosiloxane M^{Bu}D₉M' (858 g/mol) is weighed out (75 g, 0.087 mol, 1 equiv) in a 500 ml three neck round bottom flask equipped with a Teflon coated magnetic stir bar. Toluene (30 g, 34.5 ml) is added to the reaction mixture, along with 150 µl (15 ppm) of a 1% solution of Karstedt's catalyst in toluene. The reaction mixture is warmed up to 80 °C, and the carbic anhydride is slowly added over the course of an hour. The reaction mixture is stirred at 90 °C for 4 hours, then left to cool down naturally and left to stand overnight. At this point, a large amount of solid insoluble carbic anhydride is present in solution. The solution is warmed up to 80 °C, then 50 µl (5 ppm) of the catalyst solution is added at once. No notable exotherm can be observed. The reaction mixture is cooled down to 60 °C, then 300 µl (30 ppm) of the catalyst solution is added at once. The reaction mixture is warmed up to 90 °C, and stirred at that temperature for 8 hours, after which time the solution is left to cool down to room temperature naturally and left to stand overnight. The solution still is a heterogeneous mixture containing a significant amount of solid carbic anhydride. The solution is warmed up to 60 °C, after which time 1 ml (100 ppm) of the catalyst solution is added at once. A mild (2 °C) exotherm is observed. The reaction mixture is left to stir at that temperature for an additional 6 hours, then left to cool down to room temperature naturally. At this point, the solution is completely homogeneous, and IR spectroscopy reveals that the reaction is complete. The reaction mixture is transferred to a single neck round bottom flask and the volatiles are removed by rotary evaporation. The material is further stripped at 110 °C under full vacuum for one hour. The resulting liquid (73 g), is stored under nitrogen and analyzed by NMR spectroscopy, which confirmed formation of the anhydride functional siloxane of formula M^{Bu}D₉M*, where M* is a unit of formula (CAMe₂SiO_{1/2}), where CA represents a group of formula 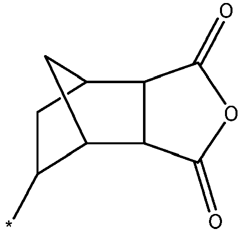 and * denotes the point of attachment of the group to the silicon atom.

### Reference Example 2: Preparation of pseudo mono-functional anhydride functional siloxane

The starting hydridosiloxane of formula MD₁₀D'M (75 g, 0.077 mol, 1 equiv) is placed in a 250 ml three-neck round bottom flask equipped with a mechanical stirrer and a nitrogen inlet. Toluene is added (25 ml), then Karstedt's catalyst as a 1 wt% solution in toluene (50 µl, 5 ppm). The reaction mixture is warmed up to reaction temperature (90 °C). The solid carbic anhydride (12.6 g. 0.077 mol, 1 equiv) is slowly added in small portions of roughly 1 g. A delayed exotherm is observed upon addition of the anhydride (roughly 3 °C per g of anhydride added). After the addition of about half of the anhydride, the temperature is ramped up to 100 °C. Upon addition of all the anhydride, the temperature is ramped up to 110 °C, and the reaction mixture left stirring for 1 hour. The temperature is then changed back to 100 °C, and an additional 100 µl (10 ppm) of the platinum catalyst solution is added. After addition of all the anhydride and heating at 110 °C for 30 minutes, Si-H content is 500 ppm. 2.5 ml (250 ppm) of the platinum catalyst solution is then added in 500 µl portions over the course of two hours. The reaction mixture is then refluxed for 6 hours. The solvent is removed by rotary evaporation, then the product is filtered over Celite^{™} and activated charcoal over a 5 µm filter. The final product is a yellowish liquid (40 g), which was analyzed by NMR and found to have formula MD₁₀D*M

### Reference Example 3 - Preparation of pseudo mono-functional anhydride functional siloxane*

The hydridosiloxane of formula MD₄₀D'M (160 g, 0.05 mol, 1 equiv) is placed in a 250 ml three-neck round bottom flask equipped with a mechanical stirrer and a nitrogen inlet. Toluene (40 ml) is added, then Karstedt's catalyst as a 1 wt% solution in toluene (500 µl, 31 ppm). The reaction mixture is warmed up to reaction temperature (90 °C). The solid carbic anhydride (7.3 g. 0.05 mol, 1 equiv ) is slowly added in portions of 200-300 mg per 3 minutes. The platinum catalyst solution (2.5 ml) is then added in 500 µl portions over the course of two hours (156 ppm). The reaction mixture is then refluxed for 6 hours. The solvent is removed by rotary evaporation, then the product is filtered over Celite^{™} and activated charcoal over a 5 µm filter. The final product is a yellowish liquid (120 g). The product was analyzed by NMR and found to have formula: MD₄₀D*M, where D is a unit of formula (CAMeSiO_{2/2}), where CA represents a group of formula 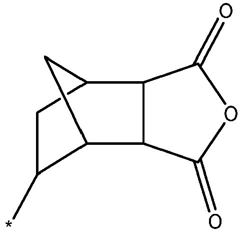 and * denotes the point of attachment of the group to the silicon atom.

### Reference Example 4 - Hydrosilylation of carbic anhydride with MD'M

The starting hydridosiloxane MD'M is weighed out (50 g, 0.21 mol, 1 equiv) in a 500 ml three neck round bottom flask equipped with a Teflon coated magnetic stir bar. Toluene (200 g) is added to the reaction mixture. The reaction mixture is warmed up to 80 °C, and 10% of the carbic anhydride is added at once. A 1% solution of Karstedt's catalyst in toluene (200 µL) is added at once. Half of the carbic anhydride (34 g total, 0.2 mol, 0.95 equiv) is added in small portions of 100 mg over the course of one hour. The reaction mixture is then left to react at 90 °C for 30 minutes. Analysis of the reaction mixture by IR spectroscopy shows that most of the Si-H has been consumed. An extra load of catalyst (50 µL) is added, and the rest of the carbic anhydride is added in the same fashion. The reaction mixture left to react at 90 °C for an extra 4 hours. The reaction mixture is then left to cool down to room temperature naturally. The next morning, the reaction mixture is found to be completely homogeneous even at room temperature, but conversion is not complete (residual 250 ppm Si-H) The reaction mixture is warmed up to 100 °C, then catalyst (100 µL) is added. The reaction mixture is left stirring at that temperature for two hours, then left to cool down to room temperature naturally. The next morning, IR analysis reveals that the reaction is complete, as the Si-H concentration is found to be 57 ppm. The reaction mixture is filtered over on a glass frit containing a first layer of Celite^{™} and a layer of activated charcoal. The filter cake is washed with 100 ml of toluene twice. The recovered solution is stripped to dryness on a rotary evaporator, then is further stripped at 120 °C under full vacuum to get rid of the residual Si-H and carbic anhydride. A white solid (70 g, 90% yield) is recovered and analyzed by NMR spectroscopy in C₆D₆ and ATR-IR. The solid was found to have formula MD*M.

### Reference Example 5 - Stability of MD*M

In 2-propanol: The anhydride-functional siloxane of formula MD*M prepared as described above in Reference Example 4 (200 mg) was placed in a scintillation vial and suspended in 20 ml of IPA. The reaction mixture was stirred at 80 °C for 4 h, and the solvent was removed by rotary evaporation. The white solid residue was analyzed by NMR spectroscopy in C₆D₆. No significant signal attributable to isopropyl groups were identified in the NMR spectrum.

In 2-propanol/water: The anhydride-functional siloxane of formula MD*M (0.53 g) was placed in a scintillation vial and dissolved in 5 g of a 90/10 IPA/water mixture. The reaction mixture was stirred at 80 °C for 4 h, and the solvent was removed by rotary evaporation. The white solid residue was analyzed by NMR spectroscopy in C₆D₆. A carboxylic acid peak is observed growing in, and at least a second set of signals. The concentration of the "opened" anhydride appears to be on the order of 33% based on integration of the new Si-Me resonances.

### Preparation Example A: General Aminoethyl Polysaccharide Preparation (Aminoethyl-Modified Hydroxyethyl Cellulose)

### Preparation

A 2000 ml, four-necked, round-bottomed flask is fitted with a stirring paddle and motor, a rubber serum cap, a nitrogen inlet, and a Claisen adaptor. The Claisen adaptor is fitted with a subsurface thermocouple connected to a J-KEM controller, and a Friedrich condenser connected to a mineral oil bubbler. The flask is charged with a hydroxyl-functional polysaccharide (134.7 g of CELLOSIZE^{™} HEC AM-103 from Dow Chemical Company, Midland Ml; 120.1 g HEC contained, 0.48 moles, DS 2.0), an aziridinium halide precursor (2-aminoethyl chloride hydrochloride; 48.16 g, 0.415 moles), and a mixture of isopropyl alcohol (IPA) (672 g) and deionized water (76 g) to form a slurry. The slurry is stirred (stirring motor 70 set to rpm) for one hour while purging with nitrogen (-1 bubble per second) to remove entrained oxygen.

A base (50% aqueous sodium hydroxide; 32.78 g, 0.410 moles) is added to the stirring slurry dropwise (via plastic syringe) under nitrogen over one minute. The slurry is stirred for 5 minutes, then heated to and held at 80 °C (via heating mantle connected to the J-KEM controller set to 80 °C) for four hours. The heating mantle is then removed and the slurry is cooled in a cold water bath while maintaining a positive nitrogen pressure in the flask. When at ambient temperature, the slurry is neutralized by adding acid (glacial acetic acid; 6.0 g) to give a reaction mixture comprising the aminoethyl polysaccharide.

The aminoethyl polysaccharide is isolated from the reaction mixture as solids via vacuum filtration through a Buchner funnel (metal, coarse fritted) then washed in the Buchner funnel with the following wash liquors: once with a mixture of acetone (1200 g) and deionized water (400 g); three times with a mixture of acetone (1200 g) and deionized water (320 g); once with a mixture of acetone (1200 g) and deionized water (160 g); and twice with pure acetone (1200 g). The second acetone wash contained 0.80 g of 40% aqueous glyoxal and 0.20 g of glacial acetic acid. The aminoethyl polysaccharide is then dried overnight in vacuo at 50 °C, to give the isolated and dried aminoethyl polysaccharide aminoethyl-modified hydroxyethyl cellulose as an off-white powder (136.46 g).

### Analysis

The aminoethyl polysaccharide is manually ground (mortar and pestle), screened (#30 US standard sieve), and analyzed according to the procedures set forth above to give the following results: Volatiles Content: 3.08 %.

Ash Content: 5.85% (as sodium chloride).

Kjeldahl Nitrogen Content: 1.936%, corresponding to a degree of aminoethyl substitution of 0.389.

The 2.0% Solution Viscosity: 479 mPa·s at a shear rate of 6.31 s⁻¹ (25.0 °C; corrected for volatiles and ash).

### Preparation Example B: General Aminoethyl Polysaccharide Preparation (Aminoethyl-Modified Hydroxyethyl Cellulose)

### Preparation

The same method described in Preparation Example A was used, but 148.56 g (120.1 g contained) of CELLOSIZE^{™} HEC QP-4400H was substituted for CELLOSIZE^{™} HEC AM-103, obtaining 148.56 g of aminoethyl-modified hydroxyethyl cellulose as an off-white solid.

### Analysis

The aminoethyl polysaccharide is manually ground (mortar and pestle), screened (#30 US standard sieve), and analyzed according to the procedures set forth above to give the following results: Volatiles Content: 0.95 %.

Ash Content: 3.24% (as sodium chloride).

Kjeldahl Nitrogen Content: 1.653%, corresponding to a degree of aminoethyl substitution of 0.326.

The 2.0% Solution Viscosity: 5543 mPa·s at a shear rate of 6.31 s⁻¹ (25.0 °C; corrected for volatiles and ash).

### Preparation Example C: General Aminoethyl Polysaccharide Preparation (Aminoethyl-Modified Hydroxyethyl Cellulose)

### Preparation

A 1000 ml, four-necked, round-bottomed flask is fitted with a stirring paddle and motor, a rubber serum cap, a nitrogen inlet, and a Claisen adaptor. The Claisen adaptor is fitted with a subsurface thermocouple connected to a J-KEM controller, and a Friedrich condenser connected to a mineral oil bubbler. The flask is charged with a hydroxyl-functional polysaccharide (67.45 g of CELLOSIZE^{™} HEC AM-103 from Dow Chemical Company, Midland Ml; 60.1 g HEC contained, 0.24 moles, DS 2.0), an aziridinium halide precursor (2-aminoethyl chloride hydrochloride; 12.38 g, 0.107 moles), and a mixture of isopropyl alcohol (IPA) (336 g) and deionized water (39 g) to form a slurry. The slurry is stirred (stirring motor 70 set to rpm) for one hour while purging with nitrogen (-1 bubble per second) to remove entrained oxygen.

A base (50% aqueous sodium hydroxide; 8.27 g, 0.103 moles) is added to the stirring slurry dropwise (via plastic syringe) under nitrogen over one minute. The slurry is stirred for 5 minutes, then heated to and held at 80 °C (via heating mantle connected to the J-KEM controller set to 80 °C) for four hours. The heating mantle is then removed and the slurry is cooled in a cold water bath while maintaining a positive nitrogen pressure in the flask. When at ambient temperature, the slurry is neutralized by adding acid (glacial acetic acid; 3.0 g) to give a reaction mixture comprising the aminoethyl polysaccharide.

The aminoethyl polysaccharide is isolated from the reaction mixture as solids via vacuum filtration through a Buchner funnel (metal, coarse fritted) then washed in the Buchner funnel with the following wash liquors: once with a mixture of acetone (600 g) and deionized water (200 g); three times with a mixture of acetone (600 g) and deionized water (160 g); once with a mixture of acetone (600 g) and deionized water (80 g); and twice with pure acetone (600 g). The second acetone wash contained 0.40 g of 40% aqueous glyoxal and 0.10 g of glacial acetic acid. The aminoethyl polysaccharide is then dried overnight in vacuo at 50 °C, to give the isolated and dried aminoethyl polysaccharide aminoethyl-modified hydroxyethyl cellulose as an off-white powder (66.21 g).

### Analysis

The aminoethyl polysaccharide is manually ground (mortar and pestle), screened (#30 US standard sieve), and analyzed according to the procedures set forth above to give the following results: Volatiles Content: 1.31%.

Ash Content: 6.23% (as sodium chloride).

Kjeldahl Nitrogen Content: 0.914%, corresponding to a degree of aminoethyl substitution of 0.172.

The 2.0% Solution Viscosity: 587 mPa·s at a shear rate of 6.31 s⁻¹ (25.0 °C; corrected for volatiles and ash).

### Preparation Examples 2-4: Neutralized Aminoethyl Polysaccharides (Aminoethyl- Modified Hydroxyethyl Celluloses)

### Aminoethyl Polysaccharide Preparation

Three aminoethyl polysaccharide HCl salts (Preparation Examples 2-4) are prepared according to the procedure of Preparation Example 1 above, using various aziridinium halide precursor, as set forth in Table 2 below.

**Table 2: Aminoethyl Polysaccharide HCl Salts of Preparation Examples 2-4**

| Preparation Example | Aminoethyl-DS |
|---|---|
| A | 0.39 |
| B | 0.33 |
| C | 0.17 |

Each of the aminoethyl polysaccharide HCl salts of Preparation Examples A-C is then subjected to the neutralization procedure below to prepare three neutralized aminoethyl polysaccharides.

### Neutralization

The aminoethyl polysaccharide HCl salt is suspended in an 80:20 IPA/H₂O mixture (200 g) in a three neck flask equipped with a reflux condenser and a nitrogen inlet. The mixture is flushed with nitrogen gas for one hour. An NaOH solution (50 wt% in water; 1 equiv. based on Kjeldahl nitrogen value) is then added at once. The solution mixture is heated to and held at 70 °C for 4 hours, then left to cool down naturally. The reaction mixture is vigorously stirring at room temperature for 18 hours.

The solution is filtered (Buchner funnel with Whatman^{™} #44 filter paper), and the solids taken-up and placed back in the three neck flask and further stirred with an 80:20 IPA/H₂O mixture (200 ml) for 1-4 hours. The solids are then filtered once again (Buchner funnel with Whatman^{™} #44 filter paper), then rinsed with an 80:20 IPA/H₂O mixture (200 ml), then a 90:10 IPA/H₂O mixture (200 ml), then pure IPA (200 ml). The solids are then left to dry naturally in a fume hood for 72 hours, followed by further drying in a vacuum oven at for 4 hours at 50 °C. The solids are finely ground (mortar and pestle) to give a neutralized aminoethyl polysaccharide as a powder.

Table 3 below sets forth the parameters utilized in the neutralization of the aminoethyl polysaccharide HCl salts of Preparation Examples A-C to prepare the neutralized aminoethyl polysaccharides (A-N to C-N).

**Table 3: Aminoethyl Polysaccharides of Preparation Examples A-C**

| Preparation Example | Mass (g) | 50% NaOH_{(ag)} | DS |
|---|---|---|---|
| A-N | 100 | 15.4 | 0.39 |
| B-N | 94.7 | 8.1 | 0.33 |
| C-N | 50 | 2.6 | 0.17 |

### Reference Example D - General Procedure for Silicon Glycan Preparation

A neutralized aminoethyl-hydroxyethylcellulose compound is weighed out in a 20 ml scintillation vial equipped with a magnetic stir bar. An anhydride-functional siloxane (prepared as described above) is added at once and the reaction mixture suspended in the selected solvent mixture. The solution is placed in a heating block at 70°C and stirred for various amounts of time. The sample is cooled to room temperature naturally.

Acetone (10 ml) is added to the reaction mixture and the reaction mixture is filtered through a Buchner funnel using Whatman^{™} #44 filter paper. The solids are then washed with toluene (20 ml), a 80/20 (by weight) IPA/H₂O mixture (20 ml), a 90/10 IPA/H₂O mixture (20 ml), IPA (20 ml), toluene (20 ml) then finally acetone (2 x 20 ml). The sample is left to dry on Buchner funnel for 5 minutes, then the solids are collected in a tared glass vial and dried for 4 hours in a vacuum oven at 55 °C. The samples are then analyzed by ATR-IR, then X-ray fluorescence (XRF). The solubility of the material as a 2% water solution is tested by attempting to dissolve the material in water. If the material is insoluble, it is heated to 85 °C for several hours. If the material remains insoluble, acetic acid (1 equivalent) is added to the solution and the solution is left standing for 24 hours. Successful grafting of the silicone moiety and formation of linkage (W) was confirmed by ATR-IR spectroscopy by the appearance of characteristic amide vC=O stretches at ≈ 1760-1530 cm⁻¹.

Samples were prepared according to the procedure in this Reference Example D, using the components and amounts shown in the Tables below.

**Table D-1: (All Working Examples)**

| Sample | 1 | 2 | 3 | 4 | 5 | 6 |
|---|---|---|---|---|---|---|
| Siloxane Used: | MD₁₀D*M | MD₁₀D*M | MD₁₀D*M | MD₄₀D*M | MD₄₀D*M | MD₄₀D*M |
| Siloxane source | Example 2 | Example 2 | Example 2 | Example 3 | Example 3 | Example 3 |
| Siloxane MW (g/mol) | 920.0000 | 920.0000 | 920.0000 | 3304.0000 | 3304.0000 | 3304.0000 |
| AE-HEC used | Example C-N | Example C-N | Example C-N | Example C-N | Example C-N | Example C-N |
| Amino chain MW (g/mol) | 44.09 | 44.09 | 44.09 | 44.09 | 44.09 | 44.09 |
| Amino-DS | 0.17 | 0.17 | 0.17 | 0.17 | 0.17 | 0.17 |
| AE-HEC MW (g/mol) | 257.58 | 257.58 | 257.58 | 257.58 | 257.58 | 257.58 |
| AE-HEC mass (g) | 1.50 | 1.50 | 1.50 | 1.50 | 1.50 | 1.50 |
| AE-HEC mmol | 5.82 | 5.82 | 5.82 | 5.82 | 5.82 | 5.82 |
| AE-HEC equiv | 1.00 | 1.00 | 1.00 | 1.00 | 1.00 | 1.00 |
| AE-HEC MW (Da) | 400 k | 400 k | 400 k | 400 k | 400 k | 400 k |
| Siloxane mass (g) | 0.75 | 1.50 | 2.25 | 0.75 | 1.50 | 2.25 |
| Reaction time (h) | 24.00 | 24.00 | 24.00 | 24.00 | 24.00 | 24.00 |
| Reaction temperature (°C) | 70.00 | 70.00 | 70.00 | 70.00 | 70.00 | 70.00 |
| Water (g) | 0.50 | 0.50 | 0.50 | 0.50 | 0.50 | 0.50 |
| IPA (g) | 4.50 | 4.50 | 4.50 | 4.50 | 4.50 | 4.50 |
| MIBK (g) | 0.00 | 0.00 | 0.00 | 0.00 | 0.00 | 0.00 |
| wt%Si | 0.99 | 1.25 | 1.38 | 0.57 | 1.29 | 1.35 |

All of samples 1-6 in Table D-1 were soluble in water.

**Table D-2: All working examples)**

| Sample | 1 | 2 | 3 | 4 |
|---|---|---|---|---|
| Siloxane Used: | MBuD₉M* | MBuD₉M* | MBuD₉M* | MBuD₉M* |
| Siloxane source | Example 1 | Example 1 | Example 1 | Example 1 |
| Siloxane MW (g/mol) | 1002.20 | 1002.20 | 1002.20 | 1002.20 |
| AE-HEC used | Example A-N | Example A-N | Example A-N | Example A-N |
| Amino chain MW (g/mol) | 44.09 | 44.09 | 44.09 | 44.09 |
| Amino-DS | 0.39 | 0.39 | 0.39 | 0.39 |
| AE-HEC MW (g/mol) | 267.20 | 267.20 | 267.20 | 267.20 |
| AE-HEC mass (g) | 1.00 | 1.00 | 1.00 | 0.80 |
| AE-HEC mmol | 3.74 | 3.74 | 3.74 | 2.99 |
| AE-HEC equiv | 1.00 | 1.00 | 1.00 | 1.00 |
| AE-HEC e MW (Da) | 400 k | 400 k | 400 k | 400 k |
| Siloxane mass (g) | 1.00 | 1.00 | 1.00 | 2.40 |
| Reaction time (h) | 4.00 | 24.00 | 4.00 | 24.00 |
| Temperature (°C) | 70.00 | 70.00 | 70.00 | 70.00 |
| Water (g) | 0.00 | 0.00 | 4.50 | 4.50 |
| IPA (g) | 0.00 | 0.00 | 0.50 | 0.50 |
| MIBK (g) | 5.00 | 5.00 | 0.00 | 0.00 |
| wt% Si | 0.2 | 0.3 | 3.19 | 1.60 |

All samples 1-4 in Table D-2 were soluble in water. Samples 3 and 4 showed that under the conditions tested, employing a protic solvent mixture (such as isoropanol and water) in the method described herein increased the amount of silicon incorporated in the silicon glycan produced as compared to Samples 1 and 2 where a plar aprotic solvent (methyl isobutyl ketone) was used in the method.

**Table D-3: All working examples)**

| Sample | 1 | 2 | 3 | 4 | 5 |
|---|---|---|---|---|---|
| Siloxane Used: | MBuD₉M* | MBuD₉M* | MBuD₉M* | MBuD₉M* | MBuD₉M* |
| Siloxane source | Example 1 | Example 1 | Example 1 | Example 1 | Example 1 |
| Siloxane MW (g/mol) | 1002.2000 | 1002.2000 | 1002.2000 | 1002.2000 | 1002.2000 |
| AE-HEC used | Example A-N | Example A-N | Example A-N | Example A-N | Example A-N |
| Amino chain MW (g/mol) | 44.09 | 44.09 | 44.09 | 44.09 | 44.09 |
| Amino-DS | 0.39 | 0.39 | 0.39 | 0.39 | 0.39 |
| AE-HEC MW (g/mol) | 267.20 | 267.20 | 267.20 | 267.20 | 267.20 |
| AE-HEC mass (g) | 1.00 | 1.00 | 1.00 | 1.00 | 1.00 |
| AE-HEC mmol | 3.74 | 3.74 | 3.74 | 3.74 | 3.74 |
| AE-HEC equiv | 1.00 | 1.00 | 1.00 | 1.00 | 1.00 |
| AE-HEC MW (Da) | 400 k | 400 k | 400 k | 400 k | 400 k |
| Siloxane mass (g) | 1.00 | 1.00 | 1.00 | 1.00 | 1.00 |
| Reaction time (h) | 24.00 | 24.00 | 24.00 | 24.00 | 24.00 |
| Temperature (°C) | 70.00 | 70.00 | 70.00 | 70.00 | 70.00 |
| Water (g) | 0.00 | 0.50 | 1.50 | 2.00 | 2.50 |
| IPA (g) | 5.00 | 4.50 | 3.50 | 3.00 | 2.50 |
| MIBK (g) | 0.00 | 0.00 | 0.00 | 0.00 | 0.00 |
| wt% Si | 2.70 | 5.29 | 4.94 | 4.11 | 3.69 |

Samples 1-5 in Table D-3 were soluble in water.

**Table D-4: all working examples**

| Sample | 1 | 2 | 3 | 4 | 5 | 6 |
|---|---|---|---|---|---|---|
| Siloxane Used: | MBuD₉M* | MBuD₉M* | MBuD₉M* | MBuD₉M* | MBuD₉M* | MBuD₉M* |
| Siloxane source | Example 1 | Example 1 | Example 1 | Example 1 | Example 1 | Example 1 |
| Siloxane MW (g/mol) | 1002.2000 | 1002.2000 | 1002.2000 | 1002.2000 | 1002.2000 | 1002.2000 |
| AE-HEC used | Example B-N | Example B-N | Example B-N | Example B-N | Example B-N | Example B-N |
| Amino chain MW (g/mol) | 44.09 | 44.09 | 44.09 | 44.09 | 44.09 | 44.09 |
| Amino-DS | 0.33 | 0.33 | 0.33 | 0.33 | 0.33 | 0.33 |
| AE-HEC MW (g/mol) | 264.37 | 264.37 | 264.37 | 264.37 | 264.37 | 264.37 |
| AE-HEC mass (g) | 1.50 | 1.50 | 1.50 | 1.50 | 1.50 | 1.50 |
| AE-HEC mmol | 5.67 | 5.67 | 5.67 | 5.67 | 5.67 | 5.67 |
| AE-HEC equiv | 1.00 | 1.00 | 1.00 | 1.00 | 1.00 | 1.00 |
| AE-HEC MW (Da) | 900 k | 900 k | 900 k | 900 k | 900 k | 900 k |
| Siloxane mass (g) | 0.57 | 0.57 | 0.57 | 0.57 | 0.57 | 0.57 |
| Reaction time (h) | 24.00 | 2.00 | 4.00 | 8.00 | 24.00 | 72.00 |
| Temperature (°C) | 50.00 | 50.00 | 50.00 | 50.00 | 50.00 | 50.00 |
| Water (g) | 0.50 | 0.50 | 0.50 | 0.50 | 0.50 | 0.50 |
| IPA (g) | 4.50 | 4.50 | 4.50 | 4.50 | 4.50 | 4.50 |
| MIBK (g) | 0.00 | 0.00 | 0.00 | 0.00 | 0.00 | 0.00 |
| wt% Si | 2.88 | 3.42 | 3.38 | 3.35 | 2.67 | 1.94 |

**Table D-5: all comparative examples**

| Sample | 7 | 8 | 9 | 10 | 11 |
|---|---|---|---|---|---|
| Siloxane Used: | MBuDgM* | MBuDgM* | MBuDgM* | MBuD₉M* | MBuDgM* |
| Siloxane DP | 11 | 11 | 11 | 11 | 11 |
| Siloxane source | Example 1 | Example 1 | Example 1 | Example 1 | Example 1 |
| Siloxane MW (g/mol) | 1002.2000 | 1002.2000 | 1002.2000 | 1002.2000 | 1002.2000 |
| AE-HEC used | Example B-N | Example B-N | Example B-N | Example B-N | Example B-N |
| Amino chain MW (g/mol) | 44.09 | 44.09 | 44.09 | 44.09 | 44.09 |
| Amino-DS | 0.33 | 0.33 | 0.33 | 0.33 | 0.33 |
| AE-HEC MW (g/mol) | 264.37 | 264.37 | 264.37 | 264.37 | 264.37 |
| AE-HEC mass (g) | 1.50 | 1.50 | 1.50 | 1.50 | 1.50 |
| AE-HEC mmol | 5.67 | 5.67 | 5.67 | 5.67 | 5.67 |
| AE-HEC equiv | 1.00 | 1.00 | 1.00 | 1.00 | 1.00 |
| AE-HEC MW (Da) | 900 k | 900 k | 900 k | 900 k | 900 k |
| Siloxane mass (g) | 0.57 | 0.57 | 0.57 | 0.57 | 0.57 |
| Reaction time (h) | 2.00 | 4.00 | 8.00 | 24.00 | 72.00 |
| Temperature (°C) | 50.00 | 50.00 | 50.00 | 50.00 | 50.00 |
| Water (g) | 0.00 | 0.00 | 0.00 | 0.00 | 0.00 |
| IPA (g) | 0.00 | 0.00 | 0.00 | 0.00 | 0.00 |
| MIBK (g) | 5.00 | 5.00 | 5.00 | 5.00 | 5.00 |
| wt% Si | 0 | 0 | 0 | 0 | 0 |

**Table D-6: all working**

| Sample | 12 | 13 | 14 | 15 | 16 | 17 |
|---|---|---|---|---|---|---|
| Siloxane Used: | MD*M | MD*M | MD*M | MD*M | MD*M | MD*M |
| Siloxane DP | 3 | 3 | 3 | 3 | 3 | 3 |
| Siloxane source | Example 4 | Example 4 | Example 4 | Example 4 | Example 4 | Example 4 |
| Siloxane MW (g/mol) | 371.7000 | 371.7000 | 371.7000 | 371.7000 | 371.7000 | 371.7000 |
| AE-HEC used | Example B-N | Example B-N | Example B-N | Example B-N | Example B-N | Example B-N |
| Amino chain MW (g/mol) | 44.09 | 44.09 | 44.09 | 44.09 | 44.09 | 44.09 |
| Amino-DS | 0.33 | 0.33 | 0.33 | 0.33 | 0.33 | 0.33 |
| AE-HEC MW (g/mol) | 264.37 | 264.37 | 264.37 | 264.37 | 264.37 | 264.37 |
| AE-HEC mass (g) | 1.50 | 1.50 | 1.50 | 1.50 | 1.50 | 1.50 |
| AE-HEC mmol | 5.67 | 5.67 | 5.67 | 5.67 | 5.67 | 5.67 |
| AE-HEC equiv | 1.00 | 1.00 | 1.00 | 1.00 | 1.00 | 1.00 |
| AE-HEC MW (Da) | 900 k | 900 k | 900 k | 900 k | 900 k | 900 k |
| Siloxane mass (g) | 0.57 | 0.57 | 0.57 | 1.14 | 1.14 | 1.14 |
| Reaction time (h) | 4.00 | 8.00 | 24.00 | 4.00 | 8.00 | 24.00 |
| Temperature (°C) | 50.00 | 50.00 | 50.00 | 50.00 | 50.00 | 50.00 |
| Water (g) | 0.50 | 0.50 | 0.50 | 0.50 | 0.50 | 0.50 |
| IPA (g) | 4.50 | 4.50 | 4.50 | 4.50 | 4.50 | 4.50 |
| MIBK (g) | 0.00 | 0.00 | 0.00 | 0.00 | 0.00 | 0.00 |
| wt% Si | 3.16 | 2.97 | 2.34 | 4.80 | 4.54 | 3.81 |

All samples 1-17 in Tables D-3, D-4, and D-6 were soluble in water.

Viscosity profiles are obtained at 25 °C by using an Anton Paar MCR 302 Rheometer. A 25 mm cone-and-plate of 2° cone angle is utilized as a measurement geometry. The solutions are loaded onto the measurement geometry and then equilibrated at the measurement temperature for 3 min. Then, the solutions are sheared at a designated shear rate, monitoring the change in the viscosity. Once the viscosity reaches a steady state, a viscosity value is determined for the shear rate. The viscosity profiles are obtained by altering the shear rate from 0.01 to 100 sec⁻¹.

A 2% solution in water (not corrected for ash and volatiles) of working example (table D-4, sample 3) has a viscosity of 10,655 mPa.s-1 at a shear rate of 6.31 s⁻¹ while a 2% solution in water (not corrected for ash and volatiles) of comparative example (table D-5 sample 8) which was subjected to the same chemical treatment but where no silicon incorporation has occurred has a viscosity of 1,117 mPa.s-1 at a shear rate of 6.31 s-1. The drastic difference in viscosity highlights the usefulness of the inventive example as a rheology modifier for use for example as a drilling fluid.

A 1.5 wt. % deionized water solution of unmodified CELLOSIZE^{™} HEC AM 103 and 1.5 wt. % deionized water solution of silicon glycan from working examples described in table D-5, entries 6 and 8, were drawn down separately on a Mylar film with a 6 mil bar film applicator. The films were allowed to dry overnight at room temperature. All solutions gave a clear/transparent coating. Contact angle data were acquired using a Kruss DSA100 instrument on the films. Six drops of water were placed on each film separately and measured at time zero and approximately 200 seconds. Data are reported as the average and standard deviation of the 6 measurements. The precision of the measurements was determined using a t test with six measurements at the 95% confidence interval.

| **Sample ID** | **Time, sec** | **Water** | |
|---|---|---|---|
| | | **CA** | **Std dev** |
| HEC-AM-103 (comparative) | 0 | 18.1 | 1 |
| | 200 | 8.2 | 0.8 |
| Table D-4 example 3 (inventive) | 0 | 51.8 | 0.6 |
| | 200 | 41.1 | 0.7 |
| Table D-4 example 1 (inventive) | 0 | 46.0 | 0.9 |
| | 200 | 39.2 | 0.9 |

The experiments above show that the working examples where the polysaccharide is modified with a siloxane provide the desirable benefit of forming films which are repellent to water. This further demonstrates the utility of the silicon glycan of this invention as a hydrophobic film-former which is useful in personal care in the areas of skin-care or hair-care where the formation of such films results in long lasting effects of the formulation.

The invention has been described in an illustrative manner, and it is to be understood that the terminology which has been used is intended to be in the nature of words of description

## Claims

1. A silicon glycan having the formula: 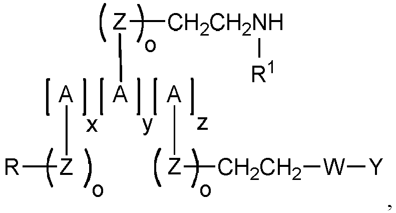
where each A comprises an independently selected saccharide moiety; each W is independently selected from the group consisting of an amide moiety and an imide moiety; each Y comprises an independently selected organosilicon moiety; each R is independently selected from substituted or unsubstituted hydrocarbyl groups, ether moieties, amine moieties, and H; each R¹ is independently selected from substituted or unsubstituted hydrocarbyl groups and H; each Z is an independently selected ether moiety;
each subscript o is independently 0 or 1; subscripts x and y are each independently from ≥0 to <1;
subscript z is from >0 to 1, with the proviso that x+y+z =1; and moieties indicated by subscripts x, y, and z may be in randomized or block form in the silicon glycan.

2. The silicon glycan of claim 1, wherein: (i) each saccharide moiety A is a hexose; (ii) each R¹ is H or a C₁-C₄ hydrocarbyl group; (iii) subscript o is 1 in each moiety indicated by subscript y; (iv) subscript o is 1 in each moiety indicated by subscript z; (v) in each moiety where o is 1 the ether moiety Z comprises an ether having the formula -(CₜH₂ₜO)ᵤ-, where subscript t is independently selected from 2 to 4 in each moiety indicated by subscript u and subscript u is from 1 to 50; (v) each R is H, a C₁-C₁₈ hydrocarbyl group, a polyoxyalkylene group, or a tertiary amino group; or (vi) any combination of (i) to (v).

3. The silicon glycan of claim 1 or 2, wherein each saccharide moiety A is a component of and collectively form a hydroxyethyl cellulose, a carboxymethyl cellulose, an ethyl hydroxyethyl cellulose, a hydroxyethyl methyl cellulose, a hydroxypropyl methyl cellulose, a methyl cellulose, an ethyl cellulose, or a combination thereof.

4. The silicon glycan of any one preceding claim, wherein each amide moiety W is independently selected from the group consisting of: 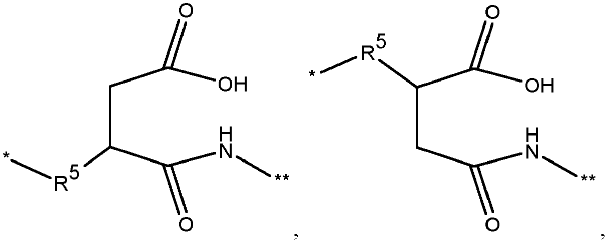 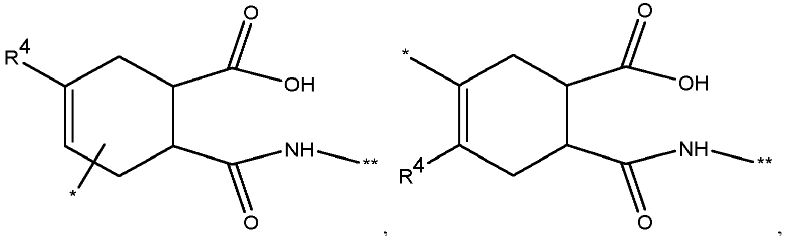 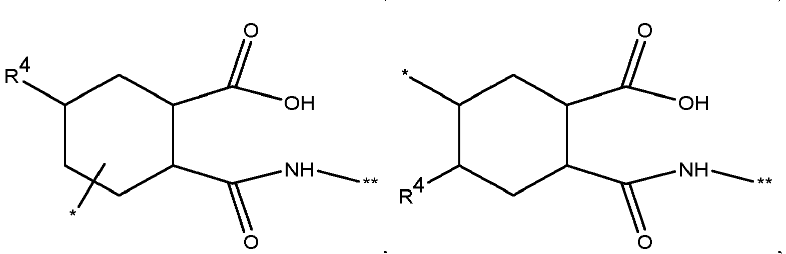 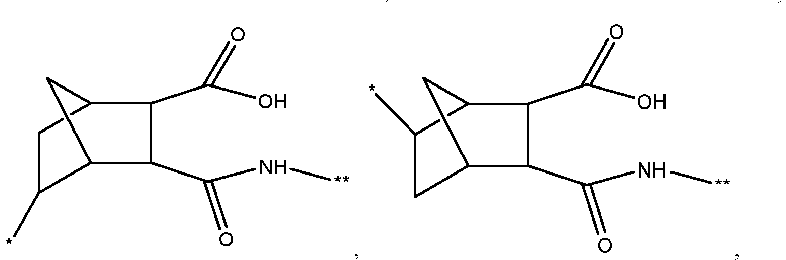 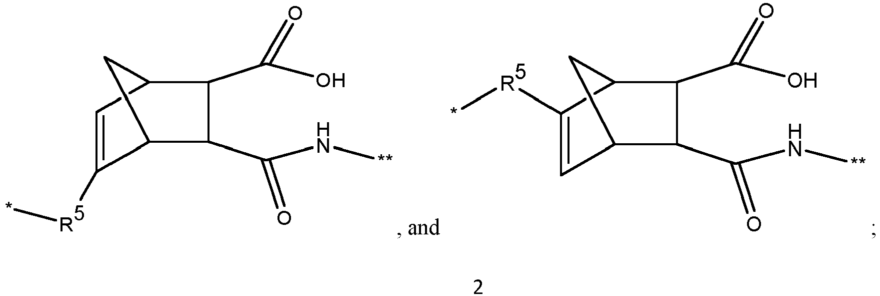 where
R⁴ is selected from the group consisting of a hydrogen atom and an alkyl group, R⁵ is a divalent hydrocarbon group, ** denotes a point of attachment to a carbon atom, and * denotes a point of attachment to organosilicon moiety Y.

5. The silicon glycan of any one preceding claim, wherein each organosilicon moiety Y is independently selected from a silyl moiety and an organopolysiloxane.

6. The silicon glycan of claim 5, wherein at least one organosilicon moiety Y is the silyl moiety; and wherein the silyl moiety has the formula: 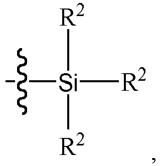 where each R² is independently selected from substituted or unsubstituted hydrocarbyl groups, siloxy groups, silyl groups, H, and alkylene oxide groups.

7. The silicon glycan of claim 5, wherein at least one organosilicon moiety Y is the organopolysiloxane; and wherein the organopolysiloxane has the formula:
[R³₃SiO_{1/2}]ₐ[R³₂SiO_{2/2}]_{b}[R³SiO_{3/2}]_{c}[SiO_{4/2}]_{d},
where each R³ is independently selected from substituted or unsubstituted hydrocarbyl groups and siloxy groups, with the proviso that at least one R³ is a bond to the amide moiety W; and subscripts a, b, c, and d are each mole fractions such that a+b+c+d =1, with the proviso that a+b+c > 0.

8. The silicon glycan of any one of claims 1 to 7, where the degree of polymerization of the silicon glycan is 10 to 10,000.

9. A method for preparing a silicon glycan of any one of claims 1 to 8, said method comprising:
reacting (A) an aminoethyl polysaccharide and (B) an anhydride-functional organosilicon compound, to give the silicon glycan; wherein the anhydride-functional organosilicon compound (B) has a formula selected from the group consisting of: 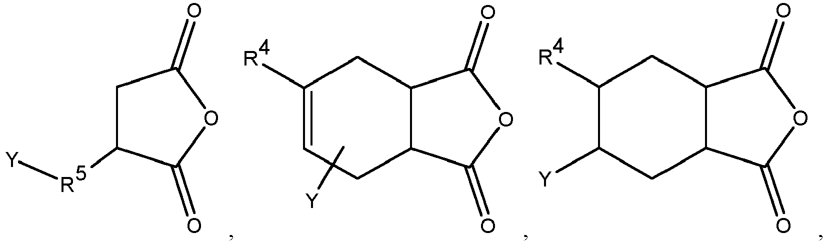 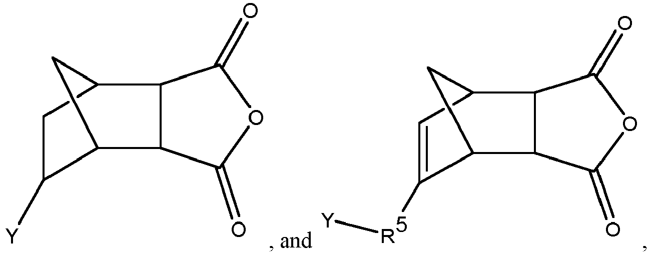 where R⁴ is selected from the group consisting of a hydrogen atom and an alkyl group, R⁵ is a divalent hydrocarbon group, Y is an organosilicon moiety;
or
wherein the anhydride-functional organosilicon compound (B) has the formula:
[R³₃SiO_{1/2}]ₐ[R³₂SiO_{2/2}]_{b}[R³SiO_{3/2}]_{c}[SiO_{4/2}]_{d},
where each R³ is independently selected from substituted or unsubstituted hydrocarbyl groups, siloxy groups, and anhydride-functional groups, with the proviso that at least one R³ comprises a bond to an anhydride-functional group R⁶, where R⁶ is selected from the group consisting of 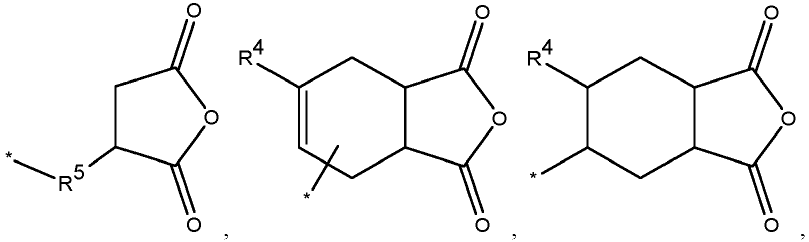 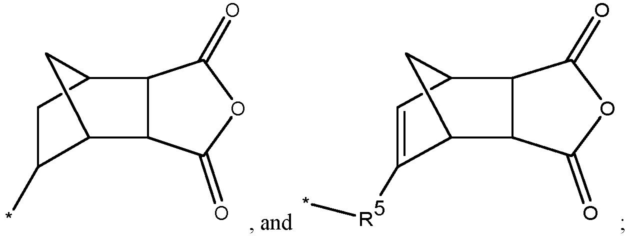 where R⁴ is selected from the group consisting of a hydrogen atom and an alkyl group, R⁵ is a divalent hydrocarbon group, and subscripts a, b, c, and d are each mole fractions such that a+b+c+d =1, with the proviso that a+b+c > 0, and * denotes a point of attachment to a carbon atom in group R¹.

10. The method of claim 9, wherein the aminoethyl polysaccharide (A) has the formula: 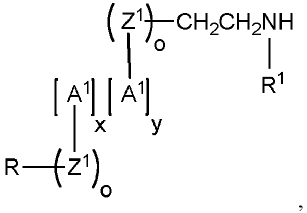 where each A¹ comprises an independently selected saccharide; each R is independently selected from substituted or unsubstituted hydrocarbyl groups, ether moieties, amine moieties, and H; each R¹ is independently selected from substituted or unsubstituted hydrocarbyl groups and H; each Z¹ is an independently selected ether moiety; each subscript o is independently 0 or 1; subscript x is from ≥0 to <1; subscript y is from >0 to 1, with the proviso that x+y=1; and moieties indicated by subscripts x and y may be in randomized or block form in the aminoethyl polysaccharide (A).

11. The method of claim 10, wherein: (i) the saccharide in each moiety A¹ is a hexose; (ii) each R¹ is H or a C₁-C₄ hydrocarbyl group; (iii) subscript o is 1 in each moiety indicated by subscript y; (iv) in each moiety where o is 1 the ether moiety Z¹ comprises an ether having the formula -(CₜH₂ₜO)ᵤ-, where subscript t is independently selected from 2 to 4 in each moiety indicated by subscript u and subscript u is from 1 to 50; (v) each R is H, a C₁-C₁₈ hydrocarbyl group, a polyoxyalkylene group, or a tertiary amino group; or (vi) any combination of (i) to (v).

12. The method of any one of claims 9-11, wherein the aminoethyl polysaccharide (A) comprises an aminoethyl-functional hydroxyethyl-glucose moiety having the formula: 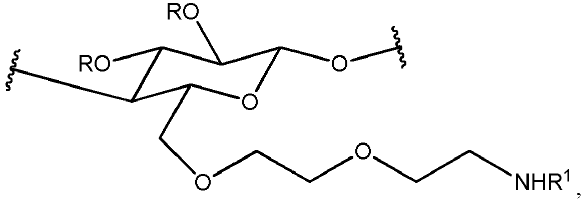 where each R is independently selected from substituted or unsubstituted hydrocarbyl groups, ether moieties, amine moieties, and H; and R is an independently selected substituted or unsubstituted hydrocarbyl group or H.

13. The method of any one of claims 9-12, further comprising preparing the aminoethyl polysaccharide (A) by reacting (A1) a hydroxyl-functional polysaccharide and (A2) an aziridinium halide compound to give the aminoethyl polysaccharide (A).

14. The method of claim 13, wherein the aziridinium halide compound (A2) has the general formula: 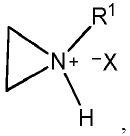 where ⁻X is chloride or bromide.

15. The method of any one of claims 9-14, wherein the aminoethyl polysaccharide (A) and the anhydride-functional organosilicon compound (B) are reacted in the presence of a protic organic solvent.

16. The method of claim 14 wherein the aminoethyl polysaccharide (A) and the anhydride-functional organosilicon compound (B) are reacted the presence of the protic organic solvent and water.

17. The method of any one of claims 9-16, wherein reacting the aminoethyl polysaccharide (A) and the anhydride-functional organosilicon compound (B) forms a reaction product comprising the silicon glycan; and wherein the method further comprises isolating the silicon glycan from the reaction product.

18. A silicon glycan prepared in accordance with any one of claims 9-17.

## Patentansprüche

1. Siliciumglycan, das die Formel aufweist: 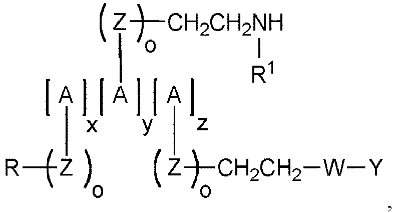 wobei jedes A einen unabhängig ausgewählten Saccharidrest umfasst; jedes W aus der Gruppe unabhängig ausgewählt ist, bestehend aus einem Amidrest und einem Imidrest; jedes Y einen unabhängig ausgewählten Organosiliciumrest umfasst; jedes R unabhängig ausgewählt ist aus substituierten oder unsubstituierten Kohlenwasserstoffgruppen, Etherresten, Aminresten und H; jedes R¹ unabhängig ausgewählt ist aus substituierten oder unsubstituierten Kohlenwasserstoffgruppen und H; jedes Z ein unabhängig ausgewählter Etherrest ist; jeder Index o unabhängig 0 oder 1 ist; Indizes x und y jeweils unabhängig von ≥0 bis <1 beträgt; Index z von >0 bis 1 beträgt, mit der Maßgabe, dass x+y+z =1; und Reste, die durch Indizes x, y und z angegeben sind, in dem Siliciumglycan in randomisierter oder Blockform vorliegen können.

2. Siliciumglycan nach Anspruch 1, wobei: (i) jeder Saccharidrest A eine Hexose ist; (ii) jedes R¹ H oder eine C₁-C₄-Kohlenwasserstoffgruppe ist; (iii) Index o in jedem durch Index y angegebenen Rest 1 beträgt; (iv) Index o in jedem durch Index z angegebenen Rest 1 beträgt; (v) in jedem Rest, in dem o 1 beträgt, der Etherrest Z einen Ether umfasst, der die Formel -(CₜH₂ₜO)ᵤ-aufweist, wobei Index t in jedem durch Index u angegebenen Rest unabhängig aus 2 bis 4 ausgewählt ist und Index u zwischen 1 und 50 beträgt; (v) jedes R H, eine C₁-C₁₈-Kohlenwasserstoffgruppe, eine Polyoxyalkylengruppe oder eine tertiäre Aminogruppe ist; oder (vi) eine beliebige Kombination von (i) bis (v).

3. Siliciumglycan nach Anspruch 1 oder 2, wobei jeder Saccharidrest A eine Komponente davon ist und gemeinsam eine Hydroxyethylcellulose, eine Carboxymethylcellulose, eine Ethylhydroxyethylcellulose, eine Hydroxyethylmethylcellulose, eine Hydroxypropylmethylcellulose, eine Methylcellulose, eine Ethylcellulose oder eine Kombination davon bildet.

4. Siliciumglycan nach einem der vorstehenden Ansprüche, wobei jeder Amidrest W unabhängig aus der Gruppe ausgewählt ist, bestehend aus: 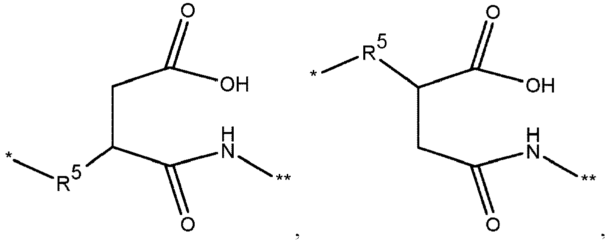 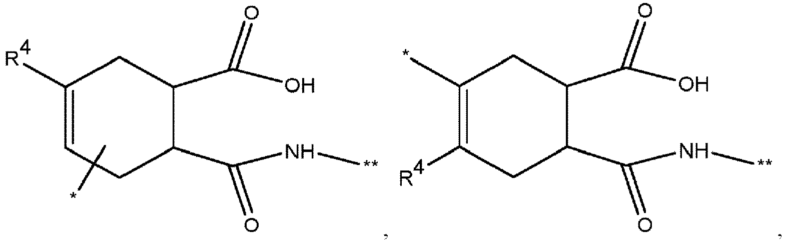 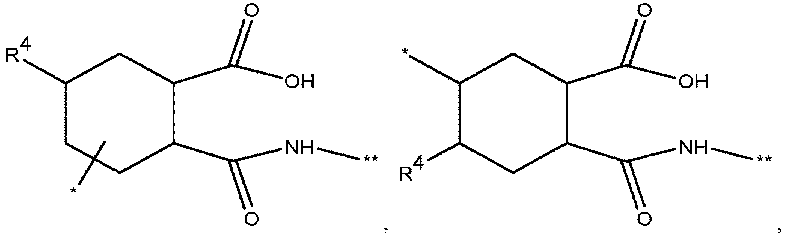 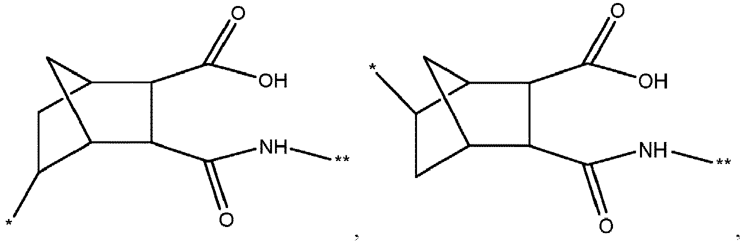 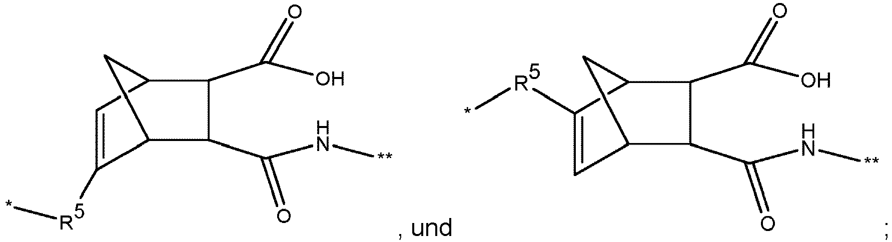 wobei
R⁴ ausgewählt ist aus der Gruppe bestehend aus einem Wasserstoffatom und einer Alkylgruppe, R⁵ eine zweiwertige Kohlenwasserstoffgruppe ist, ** einen Bindungspunkt an einem Kohlenstoffatom bezeichnet, und * einen Bindungspunkt an einem Organosiliciumrest Y bezeichnet.

5. Siliciumglycan nach einem der vorstehenden Ansprüche, wobei jeder Organosiliciumrest Y aus einem Silylrest und einem Organopolysiloxan unabhängig ausgewählt ist.

6. Siliciumglycan nach Anspruch 5, wobei mindestens ein Organosiliciumrest Y der Silylrest ist; und wobei der Silylrest die folgende Formel aufweist: 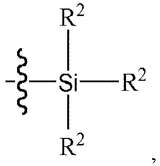 wobei jedes R² aus substituierten oder unsubstituierten Hydrocarbylgruppen, Siloxygruppen, Silylgruppen, H und Alkylenoxidgruppen unabhängig ausgewählt ist.

7. Siliciumglycan nach Anspruch 5, wobei mindestens ein Organosiliciumrest Y das Organopolysiloxan ist; und wobei das Organopolysiloxan die Formel aufweist:
[R³₃SiO_{1/2}]ₐ[R³₂SiO_{2/2}]_{b}[R³SiO_{3/2}]_{c}[SiO_{4/2}]_{d},
wobei jedes R³ unabhängig aus substituierten und unsubstituierten Hydrocarbylgruppen und Siloxygruppen ausgewählt ist, mit der Maßgabe, dass mindestens ein R³ eine Verbindung zu dem Amidrest W ist; und Indizes a, b, c und d jeweils Molenbrüche sind, derart, dass a+b+c+d =1, mit der Maßgabe, dass a+b+c > 0.

8. Siliciumglycan nach einem der Ansprüche 1 bis 7, wobei der Polymerisationsgrad des Siliciumglycans 10 bis 10.000 beträgt.

9. Verfahren zum Herstellen eines Siliciumglycans nach einem der Ansprüche 1 bis 8, das Verfahren umfassend:
Umsetzen (A) eines Aminoethylpolysaccharids und (B) einer anhydridfunktionellen Organosiliciumverbindung, um das Siliciumglycan zu erhalten; wobei die anhydridfunktionelle Organosiliciumverbindung (B) eine Formel aufweist, die ausgewählt ist aus der Gruppe bestehend aus: 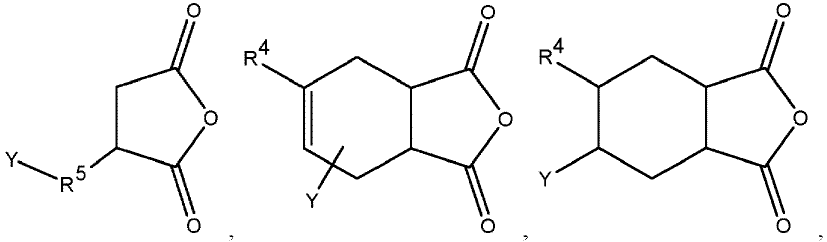 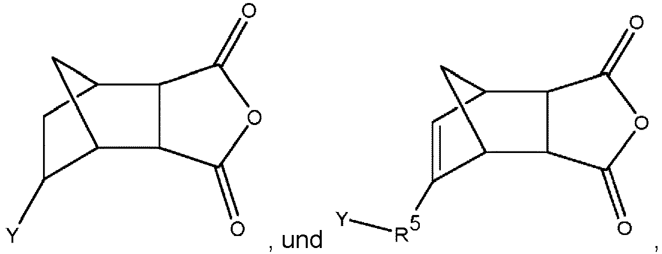
wobei R⁴ aus der Gruppe ausgewählt ist, bestehend aus einem Wasserstoffatom und einer Alkylgruppe, R⁵ eine zweiwertige Kohlenwasserstoffgruppe ist, Y ein Organosiliciumrest ist;
oder
wobei die anhydridfunktionelle Organosiliciumverbindung (B) die Formel aufweist:
[R³₃SiO_{1/2}]ₐ[R³₂SiO_{2/2}]_{b}[R³SiO_{3/2}]_{c}[SiO_{4/2}]_{d},
wobei jedes R³ aus substituierten oder unsubstituierten Hydrocarbylgruppen, Siloxygruppen und anhydridfunktionellen Gruppen unabhängig ausgewählt ist, mit der Maßgabe, dass mindestens ein R³ eine Verbindung zu einer anhydridfunktionellen Gruppe R⁶ umfasst, wobei R⁶ aus der Gruppe ausgewählt ist, bestehend aus 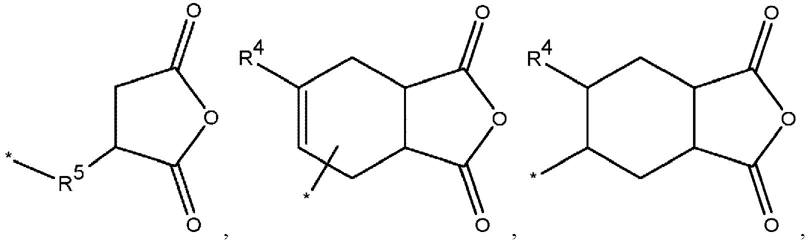 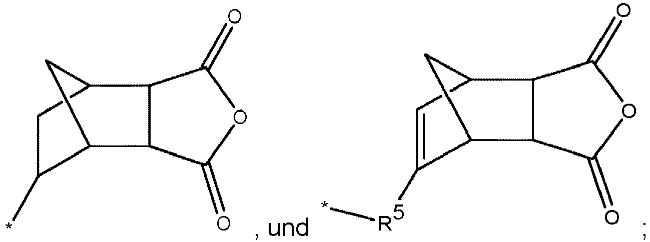
wobei R⁴ aus der Gruppe ausgewählt ist, bestehend aus einem Wasserstoffatom und einer Alkylgruppe, R⁵ eine zweiwertige Kohlenwasserstoffgruppe ist, und Indizes a, b, c und d jeweils Molenbrüche sind, derart, dass a+b+c+d =1, mit der Maßgabe, dass a+b+c > 0, und * einen Bindungspunkt an einem Kohlenstoffatom in der Gruppe R¹ bezeichnet.

10. Verfahren nach Anspruch 9, wobei das Aminoethylpolysaccharid (A) die Formel aufweist: 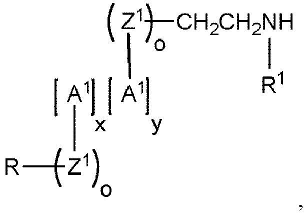 wobei jedes A¹ ein unabhängig ausgewähltes Saccharid umfasst; jedes R unabhängig ausgewählt ist aus substituierten oder unsubstituierten Kohlenwasserstoffgruppen, Etherresten, Aminresten und H; jedes R¹ unabhängig ausgewählt ist aus substituierten oder unsubstituierten Kohlenwasserstoffgruppen und H; jedes Z¹ ein unabhängig ausgewählter Etherrest ist; jeder Index o unabhängig 0 oder 1 ist; Index x von ≥0 bis 1 ist; Index y von >0 bis 1 beträgt, mit der Maßgabe, dass x+y=1; und Reste, die durch Indizes x und y angegeben sind, in dem Aminoethylpolysaccharid (A) in randomisierter oder Blockform vorliegen können.

11. Verfahren nach Anspruch 10, wobei: (i) das Saccharid in jedem Rest A¹ eine Hexose ist; (ii) jedes R¹ H oder eine C₁-C₄-Kohlenwasserstoffgruppe ist; (iii) Index o in jedem durch Index y angegebenen Rest 1 beträgt; (iv) in jedem Rest, in dem o 1 beträgt, der Etherrest Z¹ einen Ether umfasst, der die Formel -(CtH₂ₜO)ᵤ-aufweist, wobei Index t in jedem durch Index u angegebenen Rest unabhängig aus 2 bis 4 ausgewählt ist und Index u zwischen 1 und 50 beträgt; (v) jedes R H, eine C₁-C₁₈-Kohlenwasserstoffgruppe, eine Polyoxyalkylengruppe oder eine tertiäre Aminogruppe ist; oder (vi) eine beliebige Kombination von (i) bis (v).

12. Verfahren nach einem der Ansprüche 9 bis 11, wobei das Aminoethylpolysaccharid (A) einen aminoethylfunktionellen Hydroxyethylglucoserest umfasst, der die Formel aufweist: 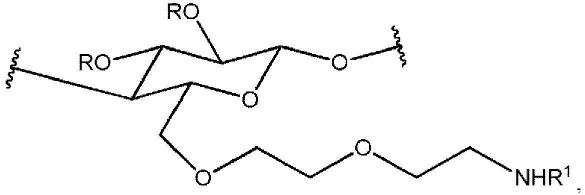 wobei jedes R aus substituierten oder unsubstituierten Kohlenwasserstoffgruppen, Etherresten, Aminresten und H unabhängig ausgewählt ist; jedes R eine unabhängig ausgewählte substituierte oder unsubstituierte Kohlenwasserstoffgruppe oder H ist.

13. Verfahren nach einem der Ansprüche 9 bis 12, ferner umfassend das Herstellen des Aminoethylpolysaccharids (A) durch Umsetzen (A1) von einem hydroxylfunktionellen Polysaccharid und (A2) einer Aziridiniumhalogenidverbindung, um das Aminoethylpolysaccharid (A) zu erhalten.

14. Verfahren nach Anspruch 13, wobei die Aziridiniumhalogenidverbindung (A2) die allgemeine Formel aufweist: 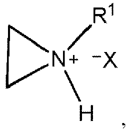 wobei -X Chlorid oder Bromid ist.

15. Verfahren nach einem der Ansprüche 9 bis 14, wobei das Aminoethylpolysaccharid (A) und die anhydridfunktionelle Organosiliciumverbindung (B) in der Gegenwart eines protischen organischen Lösungsmittels umgesetzt werden.

16. Verfahren nach Anspruch 14, wobei das Aminoethylpolysaccharid (A) und die anhydridfunktionelle Organosiliciumverbindung (B) in der Gegenwart des protischen organischen Lösungsmittels und von Wasser umgesetzt werden.

17. Verfahren nach einem der Ansprüche 9 bis 16, wobei das Umsetzen des Aminoethylpolysaccharids (A) und der anhydridfunktionellen Organosiliciumverbindung (B) ein Umsetzungsprodukt bildet, umfassend das Siliciumglycan; und wobei das Verfahren ferner ein Isolieren des Siliciumglycans aus dem Umsetzungsprodukt umfasst.

18. Siliciumglycan, das nach einem der Ansprüche 9 bis 17 hergestellt wird.

## Revendications

1. Glycane de silicium ayant la formule : 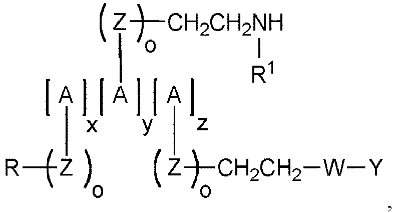 où chaque A comprend un fragment saccharide choisi indépendamment ; chaque W est choisi indépendamment dans le groupe constitué d'un fragment amide et d'un fragment imide ; chaque Y comprend un fragment organosilicium choisi indépendamment ; chaque R est choisi indépendamment parmi des groupes hydrocarbyle substitué ou non substitué, des fragments éther, des fragments amine, et H ; chaque R¹ est choisi indépendamment parmi des groupes hydrocarbyle substitué ou non substitué et H ; chaque Z est choisi indépendamment parmi un fragment éther ; chaque indice o vaut indépendamment 0 ou 1 ; les indices x et y valent chacun indépendamment de ≥ 0 à < 1 ; l'indice z vaut de > 0 à 1, à condition que x + y + z = 1 ; et les fragments indiqués par les indices x, y, et z peuvent être sous forme aléatoire ou en bloc dans le glycane de silicium.

2. Glycane de silicium selon la revendication 1, dans lequel : (i) chaque fragment saccharide A est un hexose ; (ii) chaque R¹ est H ou un groupe hydrocarbyle en C₁-C₄ ; (iii) l'indice o vaut 1 dans chaque fragment indiqué par l'indice y ; (iv) l'indice o vaut 1 dans chaque fragment indiqué par l'indice z ; (v) dans chaque fragment où o vaut 1, le fragment éther Z comprend un éther ayant la formule -(CₜH₂ₜO)ᵤ-, où l'indice t est choisi indépendamment parmi 2 à 4 dans chaque fragment indiqué par l'indice u et l'indice u vaut de 1 et 50 ; (v) chaque R est H, un groupe hydrocarbyle en C₁-C₁₈, un groupe polyoxyalkylène, ou un groupe amino tertiaire ; ou (vi) toute combinaison de (i) à (v).

3. Glycane de silicium selon la revendication 1 ou 2, dans lequel chaque fragment saccharide A est un composant de, et forme collectivement, une hydroxyéthylcellulose, une carboxyméthylcellulose, une éthylhydroxyéthylcellulose, une hydroxyéthylméthylcellulose, une hydroxypropylméthylcellulose, une méthylcellulose, une éthylcellulose, ou une combinaison de celles-ci.

4. Glycane de silicium selon l'une quelconque revendication précédente, dans lequel chaque fragment amide W est choisi indépendamment dans le groupe constitué de :
sclectcd from the group consisling of: 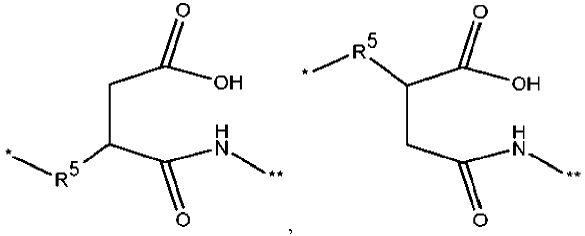 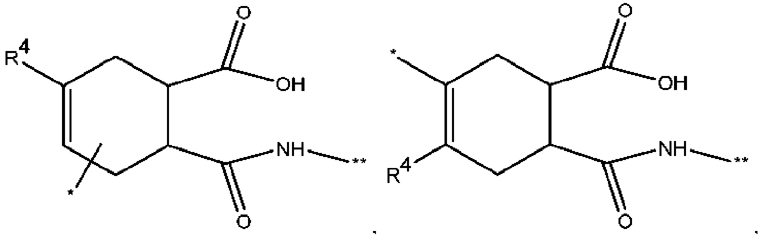 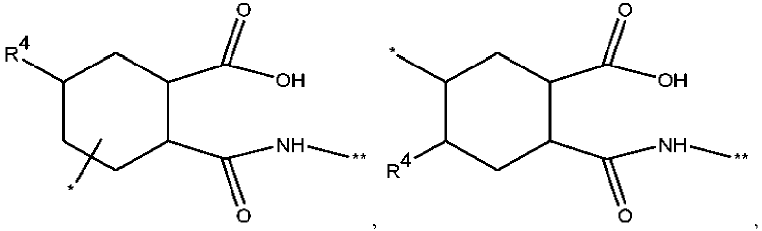 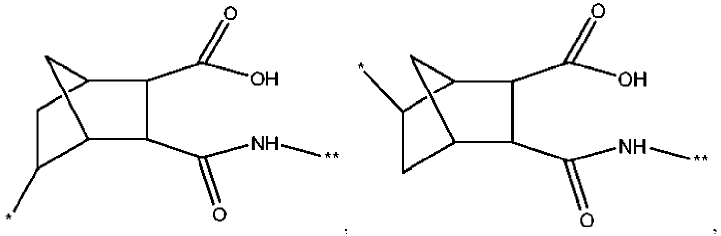 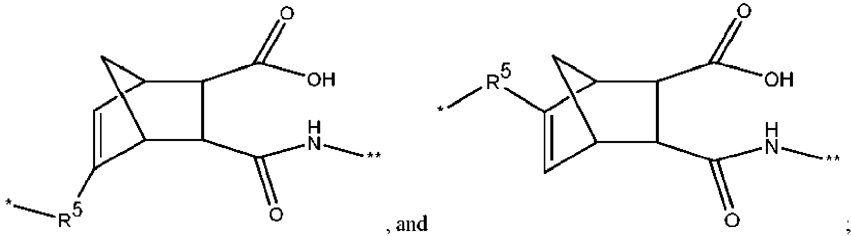 where
R⁴ est choisi dans le groupe constitué d'un atome d'hydrogène et d'un groupe alkyle, R⁵ est un groupe hydrocarbure divalent, ** indique un point de liaison à un atome de carbone, et * indique un point de liaison à un fragment organosilicium Y.

5. Glycane de silicium selon l'une quelconque revendication précédente, dans lequel chaque fragment organosilicium Y est choisi indépendamment parmi un fragment silyle et un organopolysiloxane.

6. Glycane de silicium selon la revendication 5, dans lequel au moins un fragment organosilicium Y est le fragment silyle ; et dans lequel le fragment silyle a la formule : 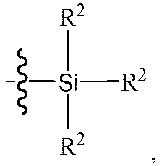 où chaque R² est choisi indépendamment parmi des groupes hydrocarbyle substitué ou non substitué, des groupes siloxy, des groupes silyle, H, et des groupes oxyde d'alkylène.

7. Glycane de silicium selon la revendication 5, dans lequel au moins un fragment organosilicium Y est l'organopolysiloxane ; et dans lequel l'organopolysiloxane a la formule :
[R³₃SiO_{1/2}]ₐ[R³₂SiO_{2/2}]_{b}[R³SiO_{3/2}]_{c}[SiO_{4/2}]_{d},
où chaque R³ est choisi indépendamment parmi des groupes siloxy et groupes hydrocarbyle substitué et non substitué, à condition qu'au moins un R³ soit une liaison au fragment amide W ; et les indices a, b, c, et d sont chacun des fractions molaires telles que a + b + c + d = 1, à condition que a + b + c > 0.

8. Glycane de silicium selon l'une quelconque des revendications 1 à 7, où le degré de polymérisation du glycane de silicium est de 10 à 10 000.

9. Procédé de préparation d'un glycane de silicium selon l'une quelconque des revendications 1 à 8, ledit procédé comprenant :
la réaction (A) d'un polysaccharide d'aminoéthyle et (B) d'un composé organosilicium à fonctionnalité anhydride, pour obtenir le glycane de silicium ;
dans lequel le composé organosilicium à fonctionnalité anhydride (B) a une formule choisie dans le groupe constitué de : 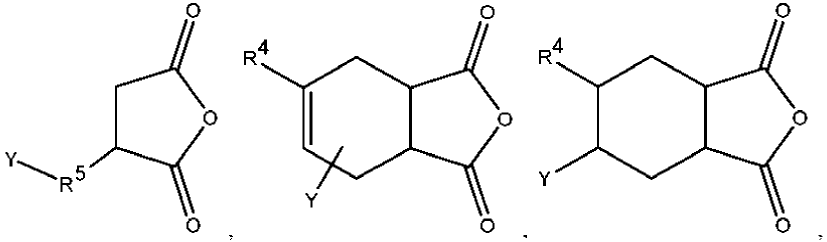 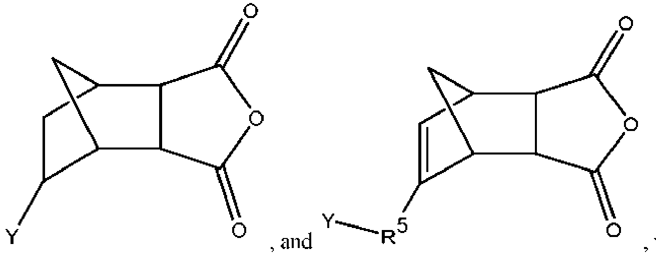 wliere R⁴ is selected from the
, et, où R⁴ est choisi dans le groupe constitué d'un atome d'hydrogène et d'un groupe alkyle, R⁵ est un groupe hydrocarbure divalent, Y est un fragment organosilicium ;
ou
dans lequel le composé organosilicium à fonctionnalité anhydride (B) a la formule :
[R³₃SiO_{1/2}]ₐ[R³₂SiO_{2/2}]_{b}[R³SiO_{3/2}]_{c}[SiO_{4/2}]_{d},
où chaque R³ est choisi indépendamment parmi des groupes hydrocarbyle substitué ou non substitué, des groupes siloxy, et des groupes à fonctionnalité anhydride, à condition qu'au moins un R³ comprenne une liaison à un groupe à fonctionnalité anhydride R⁶, où R⁶ est choisi dans le groupe constitué de 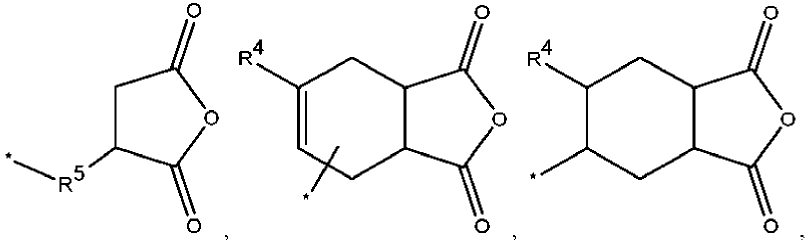 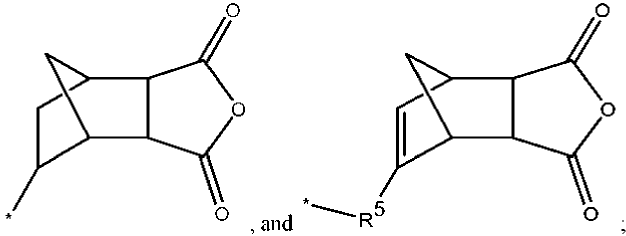 where R⁴ is selected from the
, et ; où R⁴ est choisi dans le groupe constitué d'un atome d'hydrogène et d'un groupe alkyle, R⁵ est un groupe hydrocarbure bivalent, et les indices a, b, c, et d sont chacun des fractions molaires telles que a + b + c + d = 1, à condition que a + b + c > 0, et * indique un point de liaison à un atome de carbone dans le groupe R¹.

10. Procédé selon la revendication 9, dans lequel le polysaccharide d'aminoéthyle (A) a la formule : 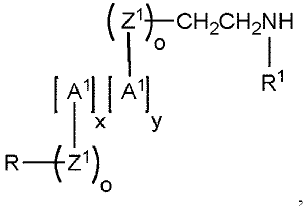 où chaque A¹ comprend un saccharide choisi indépendamment ; chaque R est choisi indépendamment parmi des groupes hydrocarbyle substitué ou non substitué, des fragments éther, des fragments amine, et H ; chaque R¹ est choisi indépendamment parmi des groupes hydrocarbyle substitué ou non substitué et H ; chaque Z¹ est un fragment éther choisi indépendamment ; chaque indice o vaut indépendamment 0 ou 1 ; l'indice x va de ≥ 0 à < 1 ; l'indice y va de > 0 à 1, à condition que x + y = l ; et les fragments indiqués par les indices x et y peuvent être sous forme aléatoire ou en bloc dans le polysaccharide d'aminoéthyle (A).

11. Procédé selon la revendication 10, dans lequel : (i) le saccharide dans chaque fragment A¹ est un hexose ; (ii) chaque R¹ est H ou un groupe hydrocarbyle en C₁-C₄ ; (iii) l'indice o vaut 1 dans chaque fragment indiqué par l'indice y ; (iv) dans chaque fragment où o vaut 1, le fragment éther Z¹ comprend un éther ayant la formule -(CₜH₂ₜO)ᵤ-, où l'indice t est choisi indépendamment parmi 2 à 4 dans chaque fragment indiqué par l'indice u et où l'indice u va de 1 à 50 ; (v) chaque R est H, un groupe hydrocarbyle en C₁-C₁₈, un groupe polyoxyalkylène, ou un groupe amino tertiaire ; ou (vi) toute combinaison de (i) à (v).

12. Procédé selon l'une quelconque des revendications 9 à 11, dans lequel le polysaccharide d'aminoéthyle (A) comprend un fragment hydroxyéthyl-glucose à fonctionnalité aminoéthyle ayant la formule : 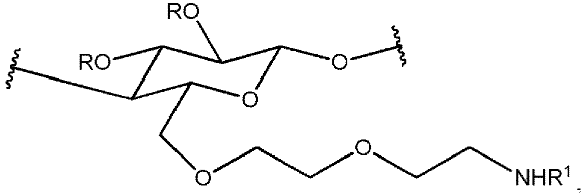 où chaque R est choisi indépendamment parmi des groupes hydrocarbyle substitué ou non substitué, des fragments éther, des fragments amine, et H ; et R est un groupe hydrocarbyle substitué ou non substitué choisi indépendamment ou H.

13. Procédé selon l'une quelconque des revendications 9 à 12, comprenant en outre la préparation du polysaccharide d'aminoéthyle (A) en faisant réagir (A1) un polysaccharide à fonctionnalité hydroxyle et (A2) un composé halogénure d'aziridinium pour obtenir le polysaccharide d'aminoéthyle (A).

14. Procédé selon la revendication 13, dans lequel le composé halogénure d'aziridinium (A2) a la formule générale : 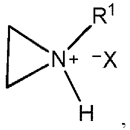 où -X est chlorure ou bromure.

15. Procédé selon l'une quelconque des revendications 9 à 14, dans lequel le polysaccharide d'aminoéthyle (A) et le composé organosilicium à fonctionnalité anhydride (B) sont amenés à réagir en présence d'un solvant organique protique.

16. Procédé selon la revendication 14, dans lequel le polysaccharide d'aminoéthyle (A) et le composé organosilicium à fonctionnalité anhydride (B) sont amenés à réagir en présence d'un solvant organique protique et d'eau.

17. Procédé selon l'une quelconque des revendications 9 à 16, dans lequel la réaction du polysaccharide d'aminoéthyle (A) et du composé organosilicium à fonctionnalité anhydride (B) forme un produit de réaction comprenant le glycane de silicium ; et dans lequel le procédé comprend en outre l'isolement du glycane de silicium du produit de réaction.

18. Glycane de silicium préparé conformément au procédé selon l'une quelconque des revendications 9 à 17.
